# EUROPEAN PATENT APPLICATION

(11) **EP 4 535 846 A1**
(43) Date of publication of application: **09.04.2025**
(21) Application number: 23829960.6
(22) Date of filing: 14.06.2023
(51) Int. Cl.: H04W 12/122, G08C 17/02

(54) **COMMUNICATION METHOD AND APPARATUS**

(30) Priority: 28.06.2022 CN 202210752194
(71) Applicant: Huawei Technologies Co., Ltd., Shenzhen, Guangdong 518129 (CN)
(72) Inventor: LEI, Zhongding, Shenzhen, Guangdong 518129 (CN); WU, Yizhuang, Shenzhen, Guangdong 518129 (CN)
(74) Representative: Goddar, Heinz J.
(86) International application number: PCT/CN2023/100148
(87) International publication number: WO 2024/001778

(57) **Abstract**

This application provides a communication method and apparatus. In the method, a first device determines a first quality of service parameter corresponding to a non-uncrewed aerial vehicle service of a terminal device, and sends the first quality of service parameter to a second device. The first quality of service parameter includes one or more of the following parameters: a first maximum bit rate, where the first maximum bit rate is a maximum bit rate corresponding to the non-uncrewed aerial vehicle service; a first priority, where the first priority indicates that a priority of a data flow of the non-uncrewed aerial vehicle service is lower than a priority of a data flow of an uncrewed aerial vehicle service; or a first identifier, where the first identifier indicates a data flow of the non-uncrewed aerial vehicle service. According to this application, the data flow of the non-uncrewed aerial vehicle service of the terminal device can be restricted by using a service type as a granularity, to reduce attacks carried out by an attacker on an uncrewed aerial vehicle by using the non-uncrewed aerial vehicle service, prevent the non-uncrewed aerial vehicle service from occupying a resource of the uncrewed aerial vehicle service, and improve safety of the uncrewed aerial vehicle.

## Description

### CROSS-REFERENCE TO RELATED APPLICATIONS

This application claims priority to Chinese Patent Application No. 202210752194.5, filed with the China National Intellectual Property Administration on June 28, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An uncrewed aerial system (unmanned/uncrewed aerial system, UAS) includes an uncrewed aerial vehicle (unmanned/uncrewed aerial vehicle, UAV) and an uncrewed aerial vehicle controller (UAV controller, UAVC). The uncrewed aerial vehicle controller may be briefly referred to as a remote control, a remote control device, or the like. The uncrewed aerial vehicle may fly autonomously or may fly according to a control instruction of the remote control. To be specific, the uncrewed aerial vehicle and the remote control may communicate with each other. For example, the remote control may send the control instruction to the uncrewed aerial vehicle, so that the uncrewed aerial vehicle sends a shot photo or video to the remote control after aerial photographing.

The uncrewed aerial system may be combined with a mobile communication network to make full use of advantages, such as wide area coverage, high reliability, and support for high-speed mobile services, of the mobile communication network, and expand the uncrewed aerial system to implement beyond-line-of-sight (remote) high-reliability flight, so that the uncrewed aerial system is more widely used and marketed. In other words, the uncrewed aerial vehicle has two roles at the same time: One is a terminal in the mobile communication network, and the other is an uncrewed aerial vehicle that can fly in the uncrewed aerial system. For the mobile communication network, the mobile communication network may not only provide the uncrewed aerial vehicle with a service (for example, multimedia communication or a data service) enjoyed by a common terminal (which is not an uncrewed aerial vehicle), but also provide the uncrewed aerial vehicle with a service (for example, remote positioning or a no-fly fence) specific to the uncrewed aerial vehicle.

The two roles of the uncrewed aerial vehicle make the uncrewed aerial vehicle face the following problems: During flight of the uncrewed aerial vehicle, an attacker uses the mobile communication network to carry out a denial of service (denial of service, DoS) attack for the uncrewed aerial vehicle. For example, the attacker sends a large amount of data of a non-uncrewed aerial vehicle service to the uncrewed aerial vehicle to maliciously occupy resources (such as network resources, computing resources, and battery resources) of the uncrewed aerial vehicle, so as to affect normal working of the uncrewed aerial vehicle. As a result, the uncrewed aerial vehicle deviates from a route, and cannot reach a destination address as expected, or even the uncrewed aerial vehicle falls. Therefore, how to reduce attacks carried out by an attacker on an uncrewed aerial vehicle by using a non-uncrewed aerial vehicle service is an urgent problem to be resolved.

### SUMMARY

Embodiments of this application provide a communication method and apparatus, to reduce attacks carried out by an attacker on an uncrewed aerial vehicle by using a non-uncrewed aerial vehicle service, and improve safety of the uncrewed aerial vehicle.

According to a first aspect, this application provides a communication method. The method may be performed by a first device, or may be performed by a component (such as a chip) of the first device. In the method, the first device determines a first quality of service parameter corresponding to a non-uncrewed aerial vehicle service of a terminal device, and sends the first quality of service parameter to a second device. The first quality of service parameter includes one or more of the following parameters: a first maximum bit rate, where the first maximum bit rate is a maximum bit rate corresponding to the non-uncrewed aerial vehicle service; a first priority, where the first priority indicates that a priority of a data flow of the non-uncrewed aerial vehicle service is lower than a priority of a data flow of an uncrewed aerial vehicle service; or a first identifier, where the first identifier indicates a data flow of the non-uncrewed aerial vehicle service.

In this embodiment of this application, the first device determines, by using the service type as a granularity, the first quality of service parameter corresponding to the non-uncrewed aerial vehicle service of the terminal device. In this way, after the first device sends the first quality of service parameter to the second device, the second device can control the data flow of the non-uncrewed aerial vehicle service of the terminal device by using the service type as a granularity, that is, restrict the data flow of the non-uncrewed aerial vehicle service, to reduce attacks carried out by an attacker on an uncrewed aerial vehicle by using the non-uncrewed aerial vehicle service, prevent the non-uncrewed aerial vehicle service from occupying a resource of the uncrewed aerial vehicle service, and improve safety of the uncrewed aerial vehicle.

In a possible implementation, the method may further include: The first device determines a second quality of service parameter corresponding to the uncrewed aerial vehicle service of the terminal device; and sends the second quality of service parameter to the second device, where the second quality of service parameter includes one or more of the following parameters: a second maximum bit rate, where the second maximum bit rate is a maximum bit rate corresponding to the uncrewed aerial vehicle service; a second priority, where the second priority indicates the priority of the data flow of the uncrewed aerial vehicle service; or a second identifier, where the second identifier indicates the data flow of the uncrewed aerial vehicle service.

In the foregoing manner, the first device can determine, by using the service type as a granularity, the second quality of service parameter corresponding to the uncrewed aerial vehicle service of the terminal device. In this way, after the first device sends the second quality of service parameter to the second device, the second device can control the data flow of the uncrewed aerial vehicle service of the terminal device by using the service type as a granularity.

In a possible implementation, the method may further include: The first device obtains a first bit rate and a second bit rate based on subscription information, where the first bit rate is a maximum bit rate that corresponds to the non-uncrewed aerial vehicle service and to which the terminal device subscribes, and the second bit rate is a maximum bit rate that corresponds to the uncrewed aerial vehicle service and to which the terminal device subscribes.

In the foregoing manner, the first device may obtain, from the subscription information, the first bit rate applicable to the non-uncrewed aerial vehicle service and the second bit rate applicable to the uncrewed aerial vehicle service.

In a possible implementation, the method may further include: The first device obtains the subscription information that is stored; or the first device receives the subscription information from a unified data management function device.

In the foregoing manner, the subscription information may be information stored in the first device, or may be information obtained from the unified data management function device. An implementation is flexible.

In a possible implementation, the subscription information includes first indication information and second indication information, the first indication information indicates that the first bit rate is applicable to the non-uncrewed aerial vehicle service, and the second indication information indicates that the second bit rate is applicable to the uncrewed aerial vehicle service.

In the foregoing manner, the subscription information may further include the first indication information and the second indication information, so that the first device determines a bit rate applicable to the non-uncrewed aerial vehicle service and a bit rate applicable to the uncrewed aerial vehicle service.

In a possible implementation, the method may further include: The first device obtains a third bit rate and a fourth bit rate based on authorization information, where the third bit rate is a maximum bit rate that corresponds to the non-uncrewed aerial vehicle service and that is authorized to the terminal device, and the fourth bit rate is a maximum bit rate that corresponds to the uncrewed aerial vehicle service and that is authorized to the terminal device.

In the foregoing manner, the first device may obtain, from the authorization information, the third bit rate applicable to the non-uncrewed aerial vehicle service and the fourth bit rate applicable to the uncrewed aerial vehicle service.

In a possible implementation, the method may further include: The first device obtains the authorization information that is stored; or the first device receives the authorization information from a data network or a policy control function device.

In the foregoing manner, the authorization information may be information stored in the first device, or may be information obtained from the data network or the policy control function device. An implementation is flexible.

In a possible implementation, the authorization information includes third indication information and fourth indication information, the third indication information indicates that the third bit rate is applicable to the non-uncrewed aerial vehicle service, and the fourth indication information indicates that the fourth bit rate is applicable to the uncrewed aerial vehicle service.

In the foregoing manner, the authorization information may further include the third indication information and the fourth indication information, so that the first device determines a bit rate applicable to the non-uncrewed aerial vehicle service and a bit rate applicable to the uncrewed aerial vehicle service.

In a possible implementation, that the first device determines a first quality of service parameter corresponding to a non-uncrewed aerial vehicle service of a terminal device may be: The first device sends a first message to the policy control function device, where the first message is used to request a quality of service parameter corresponding to the non-uncrewed aerial vehicle service of the terminal device; and the first device receives a second message from the policy control function device, where the second message includes the first quality of service parameter.

In the foregoing manner, the first device may autonomously determine the first quality of service parameter applicable to the non-uncrewed aerial vehicle service, or may obtain, from the policy control function device, the first quality of service parameter applicable to the non-uncrewed aerial vehicle service. An implementation is flexible.

In a possible implementation, the method may further include: The first device sends fifth indication information to the second device, where the fifth indication information indicates that the first quality of service parameter is applicable to the non-uncrewed aerial vehicle service.

In the foregoing manner, the first device may further send the fifth indication information to the second device, so that the second device determines that the first quality of service parameter is a quality of service parameter applicable to the non-uncrewed aerial vehicle service.

In a possible implementation, the maximum bit rate may include one or more of the following:
a maximum bit rate that can be reached by one data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

In the foregoing manner, the maximum bit rate may be implemented in a plurality of manners. An implementation is flexible.

In a possible implementation, when the maximum bit rate includes one or more of the maximum value that can be reached by the sum of the bit rates of the data flows in one session of the terminal device, the maximum value that can be reached by the sum of the bit rates of the data flows in the session for the connection of the terminal device through one user plane function device, or the maximum value that can be reached by the sum of the bit rates of the data flows in the session for the connection between the terminal device and one data network, that the first device sends the first quality of service parameter to a second device may be: The first device sends the first quality of service parameter to the terminal device and/or a user plane function device.

In a possible implementation, when the maximum bit rate includes one or more of the maximum bit rate that can be reached by the data flow of the terminal device, the maximum value that can be reached by the sum of the bit rates of the data flows of the terminal device, or the maximum value that can be reached by the sum of the bit rates of the data flows in the session of the terminal device in one slice, that the first device sends the first quality of service parameter to a second device may be: The first device sends the first quality of service parameter to the terminal device and/or an access network device.

In a possible implementation, that the first priority indicates that a priority of a data flow of the non-uncrewed aerial vehicle service is lower than a priority of a data flow of an uncrewed aerial vehicle service may be: A value of the first priority indicates that the priority of the data flow of the non-uncrewed aerial vehicle service is lower than the priority of the data flow of the uncrewed aerial vehicle service, the value of the first priority belongs to a first set, a priority of a data flow corresponding to any element in the first set is lower than a priority of a data flow corresponding to any element in a second set, the first set corresponds to the non-uncrewed aerial vehicle service, and the second set corresponds to the uncrewed aerial vehicle service.

In the foregoing manner, different value sets may respectively represent a priority of the non-uncrewed aerial vehicle service and a priority of the uncrewed aerial vehicle service, so that priorities of different service types can be distinguished by using the service type as a granularity, to avoid a problem that data flows of different service types have a same priority because the data flows have a same data attribute.

In a possible implementation, that the first identifier indicates a data flow of the non-uncrewed aerial vehicle service may be: A value of the first identifier indicates the data flow of the non-uncrewed aerial vehicle service, the value of the first identifier belongs to a third set, the third set does not intersect a fourth set, any element in the third set indicates the non-uncrewed aerial vehicle service, and any element in the fourth set indicates the uncrewed aerial vehicle service.

In the foregoing manner, different value sets may respectively represent an identifier of the non-uncrewed aerial vehicle service and an identifier of the uncrewed aerial vehicle service, so that different service types can be identified by using the service type as a granularity, to avoid a problem that data flows of different service types have a same identifier because the data flows have a same data attribute.

According to a second aspect, this application provides a communication method. The method may be performed by a second device, or may be performed by a component (such as a chip) of the second device. In the method, the second device receives a first quality of service parameter from a first device, and controls a data flow of a non-uncrewed aerial vehicle service of a terminal device based on the first quality of service parameter, where the first quality of service parameter includes one or more of the following parameters: a first maximum bit rate, where the first maximum bit rate is a maximum bit rate corresponding to the non-uncrewed aerial vehicle service; a first priority, where the first priority indicates that a priority of the data flow of the non-uncrewed aerial vehicle service is lower than a priority of a data flow of an uncrewed aerial vehicle service; or a first identifier, where the first identifier indicates the data flow of the non-uncrewed aerial vehicle service.

In this embodiment of this application, the second device can control the data flow of the non-uncrewed aerial vehicle service of the terminal device by using a service type as a granularity, that is, restrict the data flow of the non-uncrewed aerial vehicle service, to reduce attacks carried out by an attacker on an uncrewed aerial vehicle by using the non-uncrewed aerial vehicle service, prevent the non-uncrewed aerial vehicle service from occupying a resource of the uncrewed aerial vehicle service, and improve safety of the uncrewed aerial vehicle.

In a possible implementation, the method may further include: The second device receives a second quality of service parameter from the first device; and the second device controls the data flow of the uncrewed aerial vehicle service of the terminal device based on the second quality of service parameter, where the second quality of service parameter includes one or more of the following parameters: a second maximum bit rate, where the second maximum bit rate is a maximum bit rate corresponding to the uncrewed aerial vehicle service; a second priority, where the second priority indicates the priority of the data flow of the uncrewed aerial vehicle service; or a second identifier, where the second identifier indicates the data flow of the uncrewed aerial vehicle service.

In the foregoing manner, the second device can control the data flow of the uncrewed aerial vehicle service of the terminal device by using the service type as a granularity.

In a possible implementation, the second device is the terminal device or a user plane function device, and before the controlling a data flow of a non-uncrewed aerial vehicle service of a terminal device based on the first quality of service parameter, the method may further include: The second device determines a service type of each of a plurality of data packets, where the plurality of data packets include a data packet of the non-uncrewed aerial vehicle service, and the service type includes the non-uncrewed aerial vehicle service and the uncrewed aerial vehicle service; and the second device maps the plurality of data packets to at least one data flow, where the at least one data flow includes the data flow of the non-uncrewed aerial vehicle service.

In the foregoing manner, the terminal device or the user plane function device distinguishes between service types of the plurality of data packets, and maps the plurality of data packets to a plurality of data flows including the data flow of the uncrewed aerial vehicle service and the data flow of the non-uncrewed aerial vehicle service.

In a possible implementation, the method may further include: The second device adds the first identifier to the data flow of the non-uncrewed aerial vehicle service.

In the foregoing manner, the second device may add the first identifier to the data flow of the non-uncrewed aerial vehicle service, so that another device determines that the data flow is a data flow of the non-uncrewed aerial vehicle service.

In a possible implementation, the second device is an access network device, and before the controlling a data flow of a non-uncrewed aerial vehicle service of a terminal device based on the first quality of service parameter, the method may further include: The second device receives at least one data flow from the terminal device or a user plane function device; and the second device determines the data flow of the non-uncrewed aerial vehicle service based on a service type of a data packet in each of the at least one data flow and/or the first identifier.

In the foregoing manner, before controlling the data flow of the non-uncrewed aerial vehicle service of the terminal device based on the first quality of service parameter, the access network device may determine the data flow of the non-uncrewed aerial vehicle service and the data flow of the uncrewed aerial vehicle service from the at least one received data flow based on the service type of the data packet and/or the first identifier, so that the access network device restricts the data flow of the non-uncrewed aerial vehicle service in the at least one data flow, to prevent the non-uncrewed aerial vehicle service from occupying a resource of the uncrewed aerial vehicle service, and reduce attacks carried out by an attacker on an uncrewed aerial vehicle by using the non-uncrewed aerial vehicle service.

In a possible implementation, the first quality of service parameter includes the maximum bit rate of the non-uncrewed aerial vehicle service, and the maximum bit rate is a maximum bit rate that can be reached by one data flow of the terminal device; and that the second device controls a data flow of a non-uncrewed aerial vehicle service of a terminal device based on the first quality of service parameter may be: The second device obtains a first data flow, where the first data flow is the data flow of the non-uncrewed aerial vehicle service; the second device determines a bit rate of the first data flow; and if the bit rate of the first data flow is less than the maximum bit rate of the non-uncrewed aerial vehicle service, the second device sends the first data flow; or if the bit rate of the first data flow is greater than or equal to the maximum bit rate of the non-uncrewed aerial vehicle service, the second device does not send the first data flow.

In the foregoing manner, the second device may restrict the non-uncrewed aerial vehicle service of the terminal device based on the first maximum bit rate, to prevent the non-uncrewed aerial vehicle service from occupying a resource of the uncrewed aerial vehicle service, and reduce attacks carried out by an attacker on an uncrewed aerial vehicle by using the non-uncrewed aerial vehicle service.

In a possible implementation, the first quality of service parameter includes the maximum bit rate of the non-uncrewed aerial vehicle service; and that the second device controls a data flow of a non-uncrewed aerial vehicle service of a terminal device based on the first quality of service parameter may be: The second device receives a first data flow, where the first data flow is the data flow of the non-uncrewed aerial vehicle service; the second device determines a sum of bit rates of a received data flow of the non-uncrewed aerial vehicle service and the first data flow; and if the sum of the bit rates is less than the maximum bit rate of the non-uncrewed aerial vehicle service, the second device sends the first data flow; or if the sum of the bit rates is greater than or equal to the maximum bit rate of the non-uncrewed aerial vehicle service, the second device does not send the first data flow.

**In** the foregoing manner, the second device may restrict the non-uncrewed aerial vehicle service of the terminal device based on the first maximum bit rate, to prevent the non-uncrewed aerial vehicle service from occupying a resource of the uncrewed aerial vehicle service, and reduce attacks carried out by an attacker on an uncrewed aerial vehicle by using the non-uncrewed aerial vehicle service.

**In** a possible implementation, the first quality of service parameter includes the first priority, and that the second device controls a data flow of a non-uncrewed aerial vehicle service of a terminal device based on the first quality of service parameter may be: The second device obtains a first data flow and a second data flow, where the first data flow is the data flow of the non-uncrewed aerial vehicle service, and the second data flow is the data flow of the uncrewed aerial vehicle service; and the second device sends the second data flow based on the first priority.

**In** the foregoing manner, the second device may restrict the non-uncrewed aerial vehicle service of the terminal device based on the first priority, to prevent the non-uncrewed aerial vehicle service from occupying a resource of the uncrewed aerial vehicle service, and reduce attacks carried out by an attacker on an uncrewed aerial vehicle by using the non-uncrewed aerial vehicle service.

**In** a possible implementation, the method may further include: The second device receives fifth indication information from the first device, where the fifth indication information indicates that the first quality of service parameter is applicable to the non-uncrewed aerial vehicle service.

In the foregoing manner, the second device may determine, based on the fifth indication information, that the first quality of service parameter is a quality of service parameter applicable to the non-uncrewed aerial vehicle service.

In a possible implementation, the maximum bit rate includes one or more of the following:
a maximum bit rate that can be reached by a data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

In a possible implementation, when the maximum bit rate includes one or more of the maximum value that can be reached by the sum of the bit rates of the data flows in one session of the terminal device, the maximum value that can be reached by the sum of the bit rates of the data flows in the session for the connection of the terminal device through one user plane function device, or the maximum value that can be reached by the sum of the bit rates of the data flows in the session for the connection between the terminal device and one data network, the second device is the terminal device and/or the user plane function device.

In a possible implementation, when the maximum bit rate includes one or more of the maximum bit rate that can be reached by the data flow of the terminal device, the maximum value that can be reached by the sum of the bit rates of the data flows of the terminal device, or the maximum value that can be reached by the sum of the bit rates of the data flows in the session of the terminal device in one slice, the second device is the terminal device and/or the access network device.

According to a third aspect, this application provides a communication apparatus. The communication apparatus is configured to perform the method according to any one of the first aspect and the possible implementations of the first aspect. The communication apparatus is, for example, a first device, or a functional module in the first device, for example, a baseband apparatus or a chip system. In a possible implementation, the communication apparatus includes a baseband apparatus and a radio frequency apparatus. In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional unit, and the functional unit is referred to as the transceiver unit. The functional unit can implement the sending function and the receiving function. Alternatively, the sending unit and the receiving unit may be different functional units, and the transceiver unit is a general term for these functional units.

According to a fourth aspect, this application provides a communication apparatus. The communication apparatus is configured to perform the method according to any one of the second aspect and the possible implementations of the second aspect. The communication apparatus is, for example, a second device, or a functional module in the second device, for example, a baseband apparatus or a chip system. In a possible implementation, the communication apparatus includes a baseband apparatus and a radio frequency apparatus. In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional unit, and the functional unit is referred to as the transceiver unit. The functional unit can implement the sending function and the receiving function. Alternatively, the sending unit and the receiving unit may be different functional units, and the transceiver unit is a general term for these functional units.

According to a fifth aspect, this application provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the first aspect and the possible implementations of the first aspect.

According to a sixth aspect, this application provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the second aspect and the possible implementations of the second aspect.

According to a seventh aspect, this application provides a communication system. The communication system includes the communication apparatus according to the fifth aspect and/or the communication apparatus according to the sixth aspect.

According to an eighth aspect, this application provides a computer-readable storage medium. The computer-readable storage medium is configured to store a computer program or instructions, and when the computer program or the instructions are run, the method according to any one of the first aspect and the possible implementations of the first aspect is implemented, or the method according to any one of the second aspect and the possible implementations of the second aspect is implemented.

According to a ninth aspect, this application provides a computer program product including instructions. When the computer program product runs on a computer, the method according to any one of the first aspect and the possible implementations of the first aspect is implemented, or the method according to any one of the second aspect and the possible implementations of the second aspect is implemented.

According to a tenth aspect, this application further provides a chip. The chip is coupled to a memory, and is configured to read and execute program instructions in the memory, so that an apparatus in which the chip is located implements the method according to any one of the first aspect and the possible implementations of the first aspect, or implements the method according to any one of the second aspect and the possible implementations of the second aspect.

For technical effects that can be achieved in any one of the third aspect to the tenth aspect and the possible implementations of the third aspect to the tenth aspect, correspondingly refer to the technical effects that can be achieved in any one of the first aspect and the second aspect and the possible implementations of the first aspect and the second aspect. Details are not described herein again.

### BRIEF DESCRIPTION OF DRAWINGS

FIG. 1 is a diagram of a network architecture;
FIG. 2 is another diagram of a network architecture;
FIG. 3 is a diagram of an uncrewed aerial vehicle service and a non-uncrewed aerial vehicle service;
FIG. 4 is a schematic flowchart of a communication method according to an embodiment of this application;
FIG. 5 is another schematic flowchart of a communication method according to an embodiment of this application;
FIG. 6 is another schematic flowchart of a communication method according to an embodiment of this application;
FIG. 7 is a diagram of a structure of a communication apparatus according to an embodiment of this application; and
FIG. 8 is another diagram of a structure of a communication apparatus according to an embodiment of this application.

### DESCRIPTION OF EMBODIMENTS

To make the objectives, technical solutions, and advantages of embodiments of this application clearer, the following first explains and describes some terms in embodiments of this application.
1. A terminal device may also be referred to as user equipment (user equipment, UE), an access terminal, a terminal, a subscriber unit, a subscriber station, a mobile station, a remote station, a remote terminal, a mobile device, a user terminal, a user agent, a user apparatus, or the like. The terminal device may be, for example, a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal device may be a handheld device with a wireless communication function, a computing device or another device connected to a wireless modem, a vehicle-mounted device, a wearable device, an uncrewed aerial vehicle, a terminal in the internet of things or the internet of vehicles, a terminal in any form in a 5G network and a future network, relay user equipment, a terminal in a future evolved 6G network, or the like. A type, a category, or the like of the terminal device is not limited in embodiments of this application.

A function of the terminal device may be implemented by using a hardware component inside the terminal device, and the hardware component may be a processor and/or a programmable chip inside the terminal device. Optionally, the chip may be implemented by an application-specific integrated circuit (application-specific integrated circuit, ASIC) or a programmable logic device (programmable logic device, PLD). The PLD may be any one of a complex programmable logic device (complex programmable logic device, CPLD), a field-programmable gate array (field-programmable gate array, FPGA), generic array logic (generic array logic, GAL), and a system on a chip (system on a chip, SOC), or any combination thereof.

In addition, for ease of understanding embodiments of this application, the following uses an example in which the terminal device is an uncrewed aerial vehicle for description.

2. An uncrewed aerial vehicle service is a service that is specific to an uncrewed aerial vehicle and that is enjoyed by the uncrewed aerial vehicle. The uncrewed aerial vehicle service may be a communication service provided by a network for the uncrewed aerial vehicle on a control plane (control plane) and a user plane (user plane). For example, the uncrewed aerial vehicle service may be a control plane procedure (such as uncrewed aerial vehicle authentication, authorization, or flight route authorization), command and control (command and control, C2) communication, remote uncrewed aerial vehicle identification, remote positioning, a no-fly fence, or a flight map download service dedicated to the uncrewed aerial vehicle or specific to the uncrewed aerial vehicle. However, a type of the uncrewed aerial vehicle service is not limited in embodiments of this application.

3. A non-uncrewed aerial vehicle service is a service other than an uncrewed aerial vehicle service, and may be understood as a service enjoyed by a common terminal device. The non-uncrewed aerial vehicle service may be, for example, a multimedia communication service, a data service, or an internet service. However, a type of the non-uncrewed aerial vehicle service is not limited in embodiments of this application.

It should be noted that when a network cannot identify a type of an uncrewed aerial vehicle (for example, when the network identifies the uncrewed aerial vehicle as a common terminal) or an uncrewed aerial vehicle service of the uncrewed aerial vehicle is not authorized, the uncrewed aerial vehicle may be considered as a common terminal device. In this case, a service provided by the network for the uncrewed aerial vehicle is a non-uncrewed aerial vehicle service.

4. A data flow (data flow) is a data sequence of a group of ordered bytes with start and end points. For the purpose of performing fine-grained data flow control to provide a better service, the data flow may be mapped to a quality of service (quality of service, QoS) flow (flow). For example, in a downlink transmission direction (that is, a direction from a user plane function (user plane function, UPF) device to UE), when the UPF receives a data flow from a data network (or the internet), the UPF classifies data packets in the data flow, maps the data flow to a QoS flow, and sends the QoS flow to an access network device, and then the access network device sends the QoS flow to the UE. For another example, in an uplink transmission direction (that is, a direction from UE to a UPF), the UE classifies data packets in a to-be-sent data flow, maps the data flow to a QoS flow, and sends the QoS flow to an access network device, then the access network device sends the QoS flow to the UPF, and the UPF sends the QoS flow to a data network. The UPF may map the data flow to the QoS flow according to a data packet detection rule (packet detection rule, PDR). The UE may map the data flow to the QoS flow according to a QoS rule (QoS rule). The PDR rule and the QoS rule are sent by an SMF to the UPF and the UE respectively. It should be understood that a specific implementation in which the UPF maps the data flow to the QoS flow and a specific implementation in which the UE maps the data flow to the QoS flow are not limited in embodiments of this application.

For ease of understanding embodiments of this application, for ease of description, an example in which a data flow is a QoS flow is used for description in the following embodiments. It should be understood that embodiments of this application are not limited to a QoS flow. For example, a data flow may alternatively be a part of a QoS flow, or may be one data packet (or a group of data packets).

5. Quality of service parameters may include a QoS identifier (QoS identifier, QI), an aggregate bit rate, a flow bit rate (flow bit rate, FBR), an allocation and retention priority (allocation and retention priority, ARP), a maximum packet error rate, and the like.

It should be noted that, in a 5th generation (5th generation, 5G) mobile communication system, the quality of service parameter is a QoS parameter. In a future communication system such as a 6th generation (6th generation, 6G) mobile communication system, the quality of service parameter may still be a QoS parameter, or may have another name. This is not limited in embodiments of this application. For ease of description, an example in which a quality of service parameter is a QoS parameter is used for description in the following embodiments.

Embodiments of this application mainly relate to the QI, the aggregate bit rate, the FBR, and the ARP. The following separately describes the four parameters.
(1) The QI is a scalar or a single value, and a value of the QI may indicate a combination of QoS attributes. In 5G, the QI may be referred to as a 5QI. The QoS attribute may include, for example, a resource type, a priority, a packet delay budget, or a packet error rate. The resource type includes guaranteed bit rate (guaranteed bit rate, GBR) and non-GBR (non-GBR).
   For example, if a value of a 5QI of a QoS flow is 1 (that is, 5QI=1), it may indicate that a resource type of the QoS flow is GBR, a priority is 20, a packet delay budget is 100 milliseconds (ms), and a packet error rate is 10⁻². For another example, if a value of a 5QI of a QoS flow is 8, it indicates that a resource type of the QoS flow is non-GBR, a priority is 80, a packet delay budget is 300 ms, and a packet error rate is 10⁻⁶.
(2) The FBR includes a guaranteed flow bit rate (guaranteed flow bit rate, GFBR) and a maximum flow bit rate (maximum flow bit rate, MFBR). The GFBR and the MFBR are appliable to a GBR-type QoS flow. The GFBR is a bit rate that can be guaranteed (or at least reached) by one QoS flow. The MFBR is a maximum bit rate that can be reached by one QoS flow, for example, a maximum bit rate that can be reached by one GBR-type QoS flow of UE.
(3) The aggregate bit rate includes a session aggregate maximum bit rate (session aggregate maximum bit rate, session-AMBR), a UE-AMBR, and a UE slice maximum bit rate (UE slice maximum bit rate, UE-slice-MBR). In addition, the aggregate bit rate in embodiments of this application may further include a user plane function AMBR (user plane function AMBR, UPF-AMBR) and a data network AMBR (data network AMBR, DN-AMBR).

The session-AMBR is a maximum value that can be reached by a sum of bit rates of QoS flows in one session. The session-AMBR is applicable to a non-GBR-type QoS flow. For example, the session-AMBR may be a maximum value that can be reached by a sum of bit rates of all non-GBR-type QoS flows in one session. The session may be a protocol data unit (protocol data unit, PDU) session. However, this is not limited in embodiments of this application.

The UE-AMBR is a maximum value that can be reached by a sum of bit rates of QoS flows of one UE. The UE-AMBR is applicable to a non-GBR-type QoS flow. For example, the UE-AMBR may be a maximum value that can be reached by a sum of bit rates of all non-GBR-type QoS flows in all sessions of one UE.

The UE-slice-MBR is a maximum value that can be reached by a sum of bit rates of QoS flows in a session of one UE in one slice. The UE-slice-MBR is applicable to a GBR-type QoS flow and a non-GBR-type QoS flow. For example, the UE-slice-MBR may be a maximum value that can be reached by a sum of bit rates of all QoS flows (including a GBR-type QoS flow and a non-GBR-type QoS flow) in all sessions of UE in one slice.

The UPF-AMBR is a maximum value that can be reached by a sum of bit rates of QoS flows in a session for a connection of one UE through one UPF. The UPF-AMBR is applicable to a non-GBR-type QoS flow. For example, the UPF-AMBR may be a maximum value that can be reached by a sum of bit rates of all non-GBR-type QoS flows in all sessions for a connection of UE through one UPF. However, embodiments of this application are not limited thereto.

Optionally, the UPF-AMBR is further applicable to a GBR-type QoS flow. To be specific, the UPF-AMBR may alternatively be a maximum value that can be reached by a sum of bit rates of all QoS flows (including a GBR-type QoS flow and a non-GBR-type QoS flow) in all sessions for a connection of one UE through one UPF.

For ease of understanding, an example in which the UPF-AMBR is applicable to a non-GBR-type QoS flow is used in the following embodiments.

The DN-AMBR is a maximum value that can be reached by a sum of bit rates of QoS flows in a session for a connection between one UE and one DN. The DN-AMBR is applicable to a non-GBR-type QoS flow. For example, the DN-AMBR may be a maximum value that can be reached by a sum of bit rates of all non-GBR-type QoS flows in all sessions in a connection between the UE and one DN. However, embodiments of this application are not limited thereto.

Optionally, the DN-AMBR is further applicable to a GBR-type QoS flow. To be specific, the DN-AMBR may alternatively be a maximum value that can be reached by a sum of bit rates of all QoS flows (including a GBR-type QoS flow and a non-GBR-type QoS flow) in all sessions in a connection between one UE and one DN.

For ease of understanding, an example in which the DN-AMBR is applicable to a non-GBR-type QoS flow is used in the following embodiments.

(4) The ARP is used to determine whether establishment, modification, or switching of a QoS flow may be rejected due to a reason such as a resource limitation, and is usually applicable to a GBR-type QoS flow. The ARP includes an ARP priority, a preemption capability (preemption capability), and preemption vulnerability (preemption vulnerability). For example, a value of the ARP priority is an integer greater than 0 and less than 10 (which may be denoted as 1 to 15), and when the value of the ARP priority is 1, it indicates a highest priority. A value of each of the preemption capability and the preemption vulnerability is "active" or "inactive". This may indicate that a resource of a low-priority QoS flow (with "active" preemption vulnerability) is released when resources are limited, to establish a high-priority QoS flow (with an "active" preemption capability).

6. In embodiments of this application, "a plurality of" means two or more. In view of this, "a plurality of" in embodiments of this application may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship of associated objects, and indicates that three relationships may exist. For example, A and/or B may indicate the following three cases: Only A exists, both A and B exist, and only B exists. In addition, the character "/" generally indicates an "or" relationship between the associated objects, unless otherwise specified. Terms "system" and "network" in embodiments of this application may be used interchangeably.

Unless otherwise specified, ordinal numbers such as "first" and "second" in embodiments of this application are used to distinguish between a plurality of objects, and are not used to limit a sequence, a time sequence, priorities, or importance of the plurality of obj ects. For example, a first device and a second device in embodiments of this application are used to distinguish between a plurality of devices, and do not limit priorities or importance of the plurality of devices. For another example, a first message, a second message, and the like in embodiments of this application are used to distinguish between a plurality of messages, and do not limit a sequence, a time sequence, priorities, or importance of the plurality of messages.

In addition, in embodiments of this application, the term "example" is used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The foregoing describes some terms in embodiments of this application. The following describes a communication system to which embodiments of this application are applicable.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions in embodiments of this application may be applied to various communication systems. In a communication system, a part operated by an operator may be referred to as a public land mobile network (public land mobile network, PLMN) (which may also be referred to as an operator network, a mobile communication network, or the like). The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in this application may be specifically a network compliant with a requirement of the 3rd generation partnership project (3rd generation partnership project, 3GPP) standard, which is referred to as a 3GPP network for short. The 3GPP network usually includes but is not limited to a 5th generation (5th generation, 5G) mobile communication network (5G network for short), a 4th generation (4th generation, 4G) mobile communication network (4G network for short), and another future communication system such as a 6G network. For ease of description, the PLMN or the 5G network is used as an example for description in embodiments of this application.

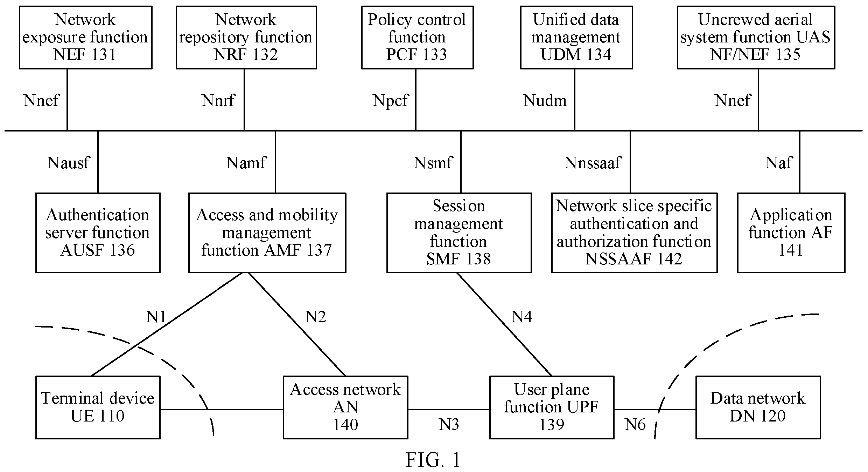

FIG. 1 is a diagram of a network architecture according to an embodiment of this application. A 5G network architecture based on a service-based architecture in a non-roaming scenario defined in a 3GPP standardization process is used as an example. The network architecture may include three parts: a terminal device part, a data network (data network, DN) part, and a PLMN part.

The terminal device part may include a terminal device 110, and may establish a connection to an operator network through an interface (for example, N1) provided by the operator network, and use a service such as data and/or voice provided by the operator network. The terminal device 110 may further access a data network 120 through the operator network, and use an operator service deployed on the data network 120 and/or a service provided by a third party. The third party may be a service provider other than the operator network and the terminal device 110, and may provide another service such as data and/or voice for the terminal device 110. A specific representation form of the third party may be specifically determined based on an actual application scenario, and is not limited herein. For a description of the terminal device 110, refer to the description of the terminal device in the foregoing term explanation part. Details are not described herein again.

The data network 120 may also be referred to as a packet data network (packet data network, PDN), and is usually a network outside the operator network, for example, a third-party network. The operator network may access a plurality of data networks 120, and a plurality of services may be deployed on the data network 120, to provide a service such as data and/or voice for the terminal device 110. For example, the data network 120 may be a private network of a smart factory, a sensor installed in a workshop of the smart factory may be the terminal device 110, a control server of the sensor is deployed in the data network 120, and the control server may provide a service for the sensor. The sensor may communicate with the control server to obtain an instruction of the control server, transmit collected sensor data to the control server according to the instruction, and the like. For another example, the data network 120 may be an internal office network of a company, a mobile phone or a computer of an employee of the company may be the terminal device 110, and the mobile phone or the computer of the employee may access information, data resources, and the like on the internal office network of the company.

The PLMN may include but is not limited to a network exposure function (network exposure function, NEF) 131, a network repository function (network function repository function, NRF) 132, a policy control function (policy control function, PCF) 133, a unified data management (unified data management, UDM) 134, an uncrewed aerial system (unmanned/uncrewed aerial system, UAS) function 135, an authentication server function (authentication server function, AUSF) 136, an access and mobility management function (access and mobility management function, AMF) 137, a session management function (session management function, SMF) 138, a user plane function (user plane function, UPF) 139, a (radio) access network ((radio) access network, (R)AN) 140, an application function (application function, AF) 141, a network slice specific authentication and authorization function (network slice specific authentication and authorization function, NSSAAF) 142, and the like. In the PLMN, a part other than a (radio) access network 140 part may be referred to as a core network (core network, CN) part.

For example, the following briefly describes network functions that may be used in embodiments of this application. In addition, FIG. 1 further relates to another network element, and details are not described herein.

The AN 140, also referred to as a radio (Radio) AN, may be considered as a subnet of an operator network, and is an implementation system between a service node and the terminal device 110 in the operator network. To access the operator network, the terminal device 110 first passes through the (R)AN 140, and then may be connected to the service node in the operator network through the (R)AN 140. An access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a pico base station device (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The policy control function 133 is a control plane function provided by an operator, and supports a unified policy framework to govern network behavior and provide subscription information related to a policy rule and policy decision for another control function. For example, in a 5G communication system, the policy control function 133 may be a PCF, as shown in FIG. 1. In a future communication system such as a 6G communication system, the policy control function 133 may still be a PCF, or may have another name. This is not limited in embodiments of this application.

The unified data management 134 is a control plane function provided by an operator, and is responsible for storing information such as a subscriber permanent identifier (subscriber permanent identifier, SUPI) of a subscriber in an operator network, a generic public subscription identifier (generic public subscription identifier, GPSI) of the subscriber, a credential (credential), and the like. The SUPI is first ciphered during transmission, and a ciphered SUPI is referred to as a subscription concealed identifier (subscription concealed identifier, SUCI). The information stored in the unified data management 134 may be used for authentication and authorization for the terminal device 110 to access the operator network. The subscriber in the operator network may be specifically a user using a service provided by the operator network, for example, a user using a SIM card of China Telecom, or a user using a SIM card of China Mobile. The credential of the subscriber may be a long-term key stored in the SIM card or a stored small file such as information related to ciphering of the SIM card, and is used for authentication and/or authorization. It should be noted that for ease of description, information such as the permanent identifier, the credential, a security context, authentication data (cookie), and a token related to verification/authentication and authorization is not limited or distinguished in embodiments of this application. For example, in a 5G communication system, the unified data management 134 may be a UDM, as shown in FIG. 1. In a future communication system such as a 6G communication system, the unified data management 134 may still be a UDM, or may have another name. This is not limited in embodiments of this application.

The uncrewed aerial system function 135 is a control plane function that is provided by an operator and that serves an uncrewed aerial system, and is responsible for exposing a network-supported uncrewed aerial vehicle service capability to an external network. For example, the uncrewed aerial system function 135 may expose an uncrewed aerial vehicle authentication/authorization service, an uncrewed aerial vehicle flight authorization service, authorization for pairing between an uncrewed aerial vehicle and a controller, uncrewed aerial vehicle re-authentication/authorization/revocation, position information reporting of the uncrewed aerial vehicle, quality of service (quality of service, QoS) control of the uncrewed aerial vehicle, traffic filtering for command and control (command and control, C2) communication, and the like. The uncrewed aerial system function 135 may be an instance (instance) generated by the network exposure function 131, or may be a sub-function of the common network exposure function 131, or may be an independent function specially used to provide an uncrewed aerial vehicle service, and therefore is usually marked as a UAS NF/NEF. However, embodiments of this application are not limited thereto.

The access and mobility management function 137 is a control plane network function provided by the PLMN, and is responsible for access control and mobility management for the terminal device 110 to access the PLMN, for example, including functions such as mobility status management, allocation of a temporary user identity, and user authentication and authorization. For example, in a 5G communication system, the access and mobility management function 137 may be an AMF, as shown in FIG. 1. In a future communication system such as a 6G communication system, the access and mobility management function 137 may still be an AMF, or may have another name. This is not limited in embodiments of this application.

The session management function 138 is a control plane network function provided by the PLMN, and is responsible for managing a protocol data unit (protocol data unit, PDU) of the terminal device 110. A PDU session is a channel for transmitting the PDU, and the terminal device and the DN 120 needs to transmit data to each other through the PDU session. The session management function 138 may be responsible for establishment, maintenance, deletion, and the like the PDU session. The session management function 138 includes session-related functions such as session management (such as session establishment, modification, and release, including tunnel maintenance between the user plane function 139 and the AN 140), selection and control of the user plane function 139, service and session continuity (service and session continuity, SSC) mode selection, and roaming. For example, in a 5G communication system, the session management function 138 may be an SMF, as shown in FIG. 1. In a future communication system such as a 6G communication system, the session management function 138 may still be an SMF, or may have another name. This is not limited in embodiments of this application.

The user plane function 139 is a gateway provided by the PLMN for communication with the data network DN 120. The user plane function 139 includes user plane-related functions such as data packet routing and transmission, data packet detection, service usage reporting, quality of service (quality of service, QoS) processing, lawful interception, uplink data packet detection, and downlink data packet storage. For example, in a 5G communication system, the user plane function 139 may be a UPF, as shown in FIG. 1. In a future communication system such as a 6G communication system, the user plane function 139 may still be a UPF, or may have another name. This is not limited in embodiments of this application.

The application function 141 is a control plane function, and may be deployed by an operator or may be deployed by an external third party. The application function 141 interacts with another network function of a core network to support services such as traffic routing control, interaction with the policy control function 133, and access network function exposure. For example, in a 5G communication system, the application function 141 may be an AF, as shown in FIG. 1. In a future communication system such as a 6G communication system, the application function 141 may still be an AF, or may have another name. This is not limited in embodiments of this application.

The network functions in the PLMN may be network elements implemented on dedicated hardware, or may be software instances running on dedicated hardware, or may be instances of virtualization functions on an appropriate platform. For example, the virtualization platform may be a cloud platform. In addition, each network function in the PLMN may also be referred to as a network element, a function entity, or a device. For example, the access and mobility management function may also be referred to as an access and mobility management function network element, an access and mobility management function entity, an access and mobility management function device, or the like, and the session management function may also be referred to as a session management function network element, a session management function entity, a session management function device, or the like. Details are not listed one by one herein.

The network functions in the PLMN shown in FIG. 1 may further include another network function. For example, the PLMN further includes a unified data repository (unified data repository, UDR) or the like (not shown in FIG. 1). The another network function included in the PLMN is not limited in embodiments of this application. In addition, a name of the network function shown in FIG. 1 is merely used as an example for description herein, and is not intended to limit a network function included in a network architecture to which the method in embodiments of this application is applicable. Names of devices that implement a network function in systems of different access technologies may be different. This is not limited in embodiments of this application.

In FIG. 1, Nnef, Nnrf, Npcf, Nudm, Nausf, Namf, Nsmf, Nnssaaf, Naf, N1, N2, N3, N4, and N6 are interface serial numbers. For example, for meanings of the interface serial numbers, refer to meanings defined in the 3GPP standard protocol. The meanings of the interface serial numbers are not limited in this application. It should be noted that a name of an interface between the network functions in FIG. 1 is merely an example. In specific implementation, the name of the interface in the system architecture may alternatively be another name. This is not limited in this application.

It should be noted that the network architecture shown in FIG. 1 does not constitute a limitation on a communication system to which embodiments of this application are applicable. The network architecture shown in FIG. 1 is a 5G system architecture. Optionally, in addition to a 5G system, the technical solutions provided in embodiments of this application may be further applied to a 4th generation mobile communication technology (the 4th generation, 4G) system, for example, an LTE system, or may be further applied to a next generation mobile communication system or another similar communication system. This is not specifically limited.

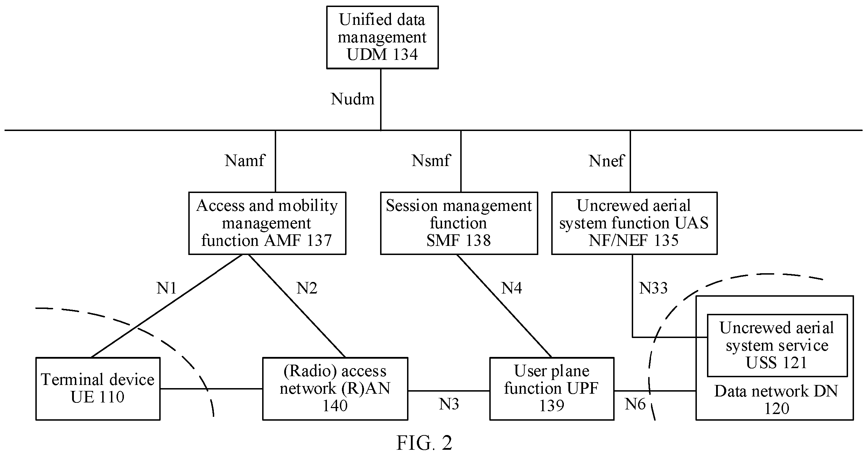

Based on the network architecture shown in FIG. 1, FIG. 2 is a diagram in which a 5G mobile network and an uncrewed aerial system are combined. As shown in FIG. 2, a network entity of an uncrewed aerial system service (UAS service suppliers, USS) 121 is added in FIG. 2. The network entity usually does not belong to an operator network, but is deployed in a third-party data network 120. However, embodiments of this application are not limited thereto. The uncrewed aerial system service 121 communicates with the uncrewed aerial system function 135 in a 3GPP network through an N33 interface.

The uncrewed aerial system service 121 may store related information of the UAS, for example, authentication information of the UAS. Based on the information, the uncrewed aerial system service 121 may perform identity authentication, flight authorization, and the like on an uncrewed aerial vehicle. A UAS supervision department may further supervise operation of the UAS by using the uncrewed aerial system service 121, to ensure safety of flight control of the uncrewed aerial vehicle and public safety. The uncrewed aerial system service 121 may further establish a channel with another supervision or safe flight department to obtain flight-related information. In some application scenarios, in addition to communicating with an uncrewed aerial vehicle/a controller through the operator network, the uncrewed aerial system service 121 may further have a function of remotely controlling flight of the uncrewed aerial vehicle. This is not limited herein. It should be noted that the uncrewed aerial system service 121 may further represent an uncrewed aerial system traffic management (UAS traffic management, UTM) entity or an entity integrating a USS and a UTM. This is not limited in this application.

In the mobile communication network-based remote control UAS shown in FIG. 2, the uncrewed aerial vehicle has two roles at the same time: One is a terminal in the operator network (that is, a PLMN, or referred to as a mobile communication network), and the other is an uncrewed aerial vehicle that can fly in the UAS. In terms of a service provided by the operator network, the operator network may not only provide the uncrewed aerial vehicle with a service (such as multimedia communication, a data service, or the internet) enjoyed by a common terminal, but also provide the uncrewed aerial vehicle with a service specific to the uncrewed aerial vehicle, such as authentication and authorization for an uncrewed aerial vehicle type (including dedicated uncrewed aerial vehicle authentication and authorization, flight route authorization, or the like), C2 communication, remote uncrewed aerial vehicle identification, remote positioning, a no-fly fence, and flight map download. For ease of description, in the following, a service specific to an uncrewed aerial vehicle is referred to as an uncrewed aerial vehicle service, and a service not specific to an uncrewed aerial vehicle is referred to as a non-uncrewed aerial vehicle service.

Because the uncrewed aerial vehicle can have two roles at the same time, the uncrewed aerial vehicle is prone to a potential safety risk of a denial of service (denial of service, DoS) attack. Specifically, during flight of the uncrewed aerial vehicle, an attacker may use a non-uncrewed aerial vehicle service of the uncrewed aerial vehicle to send a large quantity of videos, internet data, and the like that are irrelevant to the uncrewed aerial vehicle service to the uncrewed aerial vehicle, to maliciously consume resources (network resources, computing resources, battery resources, and the like) of the uncrewed aerial vehicle, and occupy resources required by the uncrewed aerial vehicle to perform the uncrewed aerial vehicle service, thereby affecting normal working of the uncrewed aerial vehicle (for example, delaying the uncrewed aerial vehicle in responding to a C2 communication instruction, or causing fast battery exhaustion). Consequently, the uncrewed aerial vehicle deviates from a flight direction and cannot arrive as expected, or even encounters a safety accident of a crash.

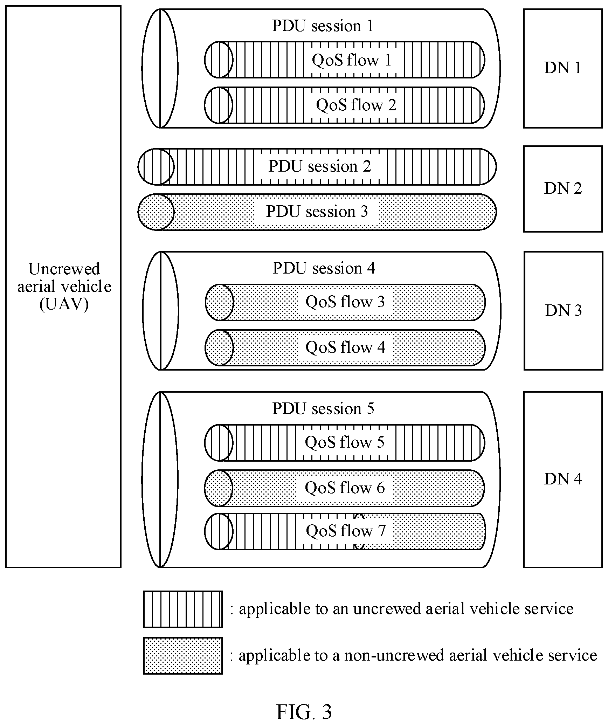

FIG. 3 is used as an example. FIG. 3 is a diagram of an uncrewed aerial vehicle service and a non-uncrewed aerial vehicle service. As shown in FIG. 3, a DN 1 is a DN specially used for an uncrewed aerial vehicle service, and supports only a session (a PDU session 1) corresponding to the uncrewed aerial vehicle service. The PDU session 1 includes a QoS flow 1 of the uncrewed aerial vehicle service and a QoS flow 2 of the uncrewed aerial vehicle service. A DN 2 is a DN used for an uncrewed aerial vehicle service and a non-uncrewed aerial vehicle service, and supports both a PDU session (a PDU session 2) corresponding to the uncrewed aerial vehicle service and a PDU session (a PDU session 3) corresponding to the non-uncrewed aerial vehicle service. A DN 3 is a DN specially used for a non-uncrewed aerial vehicle service, and supports only a PDU session (a PDU session 4) corresponding to the non-uncrewed aerial vehicle service. The PDU session 4 includes a QoS flow 3 of the non-uncrewed aerial vehicle service and a QoS flow 4 of the non-uncrewed aerial vehicle service. A DN 4 is a DN used for an uncrewed aerial vehicle service and a non-uncrewed aerial vehicle service, and supports a PDU session (a PDU session 5) corresponding to the uncrewed aerial vehicle service and the non-uncrewed aerial vehicle service. The PDU session 5 includes a QoS flow 5 of the uncrewed aerial vehicle service, a QoS flow 6 of the non-uncrewed aerial vehicle service, and a QoS flow 7 of a combination of the uncrewed aerial vehicle service and the non-uncrewed aerial vehicle service. To be specific, the QoS flow 7 includes a data packet of the uncrewed aerial vehicle service and a data packet of the non-uncrewed aerial vehicle service. In FIG. 3, the uncrewed aerial vehicle service and the non-uncrewed aerial vehicle service may share resources (such as battery resources, computing resources, and network resources) of an uncrewed aerial vehicle. In a flight process of the uncrewed aerial vehicle, a large quantity of resources of the uncrewed aerial vehicle are consumed on the non-uncrewed aerial vehicle service, and consequently, a large quantity of battery resources of the uncrewed aerial vehicle are consumed, and it cannot be ensured that the uncrewed aerial vehicle has a sufficient battery resources to reach a destination. In addition, the non-uncrewed aerial vehicle service occupies a large quantity of computing resources of the uncrewed aerial vehicle. Consequently, a computing result of the uncrewed aerial vehicle service is delayed, and an instruction of a remote control cannot be normally and quickly responded to. As a result, potential risks such as an error in an actual flight route, delayed arrival of the uncrewed aerial vehicle, and a flight accident occur.

In view of this, embodiments of this application provide a communication method and apparatus. In the method, a first device determines a first quality of service parameter corresponding to a non-uncrewed aerial vehicle service of a terminal device, and sends the first quality of service parameter to a second device. The first quality of service parameter includes one or more of the following parameters: a first maximum bit rate, where the first maximum bit rate is a maximum bit rate corresponding to the non-uncrewed aerial vehicle service; a first priority, where the first priority indicates that a priority of a data flow of the non-uncrewed aerial vehicle service is lower than a priority of a data flow of an uncrewed aerial vehicle service; or a first identifier, where the first identifier indicates a data flow of the non-uncrewed aerial vehicle service. In this way, the second device can restrict the data flow of the non-uncrewed aerial vehicle service of the terminal device by using a service type as a granularity, to reduce attacks carried out by an attacker on an uncrewed aerial vehicle by using the non-uncrewed aerial vehicle service, prevent the non-uncrewed aerial vehicle service from occupying a resource of the uncrewed aerial vehicle service, and improve safety of the uncrewed aerial vehicle.

To better describe embodiments of this application, the following describes methods provided in embodiments of this application with reference to the accompanying drawings. **In** the accompanying drawings corresponding to embodiments of this application, all optional steps are represented by dashed lines. All methods provided in embodiments of this application may be applied to the communication system shown in FIG. 1 or FIG. 2.

It should be noted that, in embodiments of this application, an uncrewed aerial vehicle service and a non-uncrewed aerial vehicle service of a terminal device are used as an example, and a data flow of the non-uncrewed aerial vehicle service is restricted (or controlled), to prevent the non-uncrewed aerial vehicle service from occupying a resource of the uncrewed aerial vehicle service. It should be understood that the uncrewed aerial vehicle service may be replaced with a first-type service of the terminal device, and the non-uncrewed aerial vehicle service may be replaced with a second-type service of the terminal device. This is also applicable to embodiments of this application. **In** other words, in embodiments of this application, the first-type service is not limited to the uncrewed aerial vehicle service, and the second-type service is not limited to the non-uncrewed aerial vehicle service. For example, the first-type service is a service that has a high reliability requirement and a low delay requirement, and the second-type service is a service that does not have a high reliability requirement or a low delay requirement. A data flow of the second-type service is restricted, to prevent the second-type service from occupying a resource of the first-type service, thereby ensuring normal execution of the first-type service. For another example, the first-type service is a high-priority service, and the second-type service is a low-priority service.

It should be noted that embodiments of this application relate to a first device and a second device. The first device may be a session management function device, an access and mobility management function device, or a policy control function device, or may be another device including a function of the foregoing device, or may be a component (for example, a chip or a functional module) in the foregoing device. A specific implementation form of the first device is not limited in embodiments of this application. The second device may be a terminal device, a user plane function device, an access network device, a session management function device, or an access and mobility management function device, or may be another device including a function of the foregoing device, or may be a component (for example, a chip or a functional module) in the foregoing device. A specific implementation form of the second device is not limited in embodiments of this application.

For ease of description, in the following embodiments, a session management function device is replaced with an SMF, a terminal device is replaced with UE, an access and mobility management function device is replaced with an AMF, a unified data management device is replaced with a UDM, a policy control function device is replaced with a PCF, a user plane function device is replaced with a UPF, a data network is replaced with a DN, an access network device is replaced with a RAN, and an uncrewed aerial system service is replaced with a USS.

In addition, for ease of understanding embodiments of this application, in the following embodiments, an example in which a data flow is a QoS flow and a quality of service parameter is a QoS parameter is used for description.

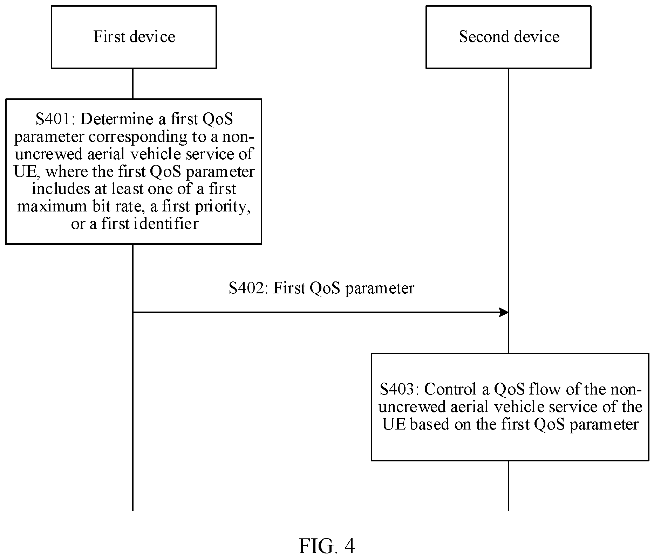

FIG. 4 is a schematic flowchart of a communication method according to an embodiment of this application. As shown in FIG. 4, the method may include the following content.

S401: A first device determines a first QoS parameter corresponding to a non-uncrewed aerial vehicle service of UE.

For example, after receiving a message that is from the UE and that is used to request to establish a session, the first device may determine the first QoS parameter corresponding to the non-uncrewed aerial vehicle service of the UE; or the first device may determine the first QoS parameter corresponding to the non-uncrewed aerial vehicle service of the UE in a procedure such as a registration procedure (registration procedure) of the UE, a service request procedure (service request procedure), or a procedure in which a UDM updates subscription information of the UE. A trigger condition and time for determining the first QoS parameter by the first device are not limited in embodiments of this application.

The first QoS parameter may include one or more of the following parameters: a first maximum bit rate, a first priority, or a first identifier. The following describes the three parameters.
(1) The first maximum bit rate is a maximum bit rate corresponding to the non-uncrewed aerial vehicle service. The maximum bit rate may include one or more of the following: an MFBR, a session-AMBR, a UPF-AMBR, a DN-AMBR, a UE-AMBR, or a UE-slice-AMBR. For descriptions of the MFBR, the session-AMBR, the UPF-AMBR, the DN-AMBR, the UE-AMBR, and the UE-slice-AMBR, refer to the foregoing term explanation part. Details are not described herein again.

For example, the maximum bit rate is the MFBR, and the first maximum bit rate may be understood as a maximum bit rate that can be reached by one QoS flow of the non-uncrewed aerial vehicle service of the UE, or may be understood as a maximum bit rate that can be reached by one GBR-type QoS flow of the non-uncrewed aerial vehicle service of the UE. In this case, the first maximum bit rate may be referred to as an MFBR of the non-uncrewed aerial vehicle service, for example, denoted as MFBR-non UAV.

For example, the maximum bit rate is the session-AMBR, and the first maximum bit rate may be understood as a maximum value that can be reached by a sum of bit rates of QoS flows in one session corresponding to the non-uncrewed aerial vehicle service, or may be understood as a maximum value that can be reached by a sum of bit rates of all non-GBR-type QoS flows in one session corresponding to the non-uncrewed aerial vehicle service. In this case, the first maximum bit rate may be referred to as a session-AMBR of the non-uncrewed aerial vehicle service, for example, denoted as session-AMBR-non UAV.

For another example, the maximum bit rate is the UPF-AMBR, and the first maximum bit rate may be understood as a maximum value that can be reached by a sum of bit rates of QoS flows in a session that corresponds to the non-uncrewed aerial vehicle service and that is for a connection of the UE through one UPF, or may be understood as a maximum value that can be reached by a sum of bit rates of all non-GBR-type QoS flows in all sessions that correspond to the non-uncrewed aerial vehicle service and that are for a connection of the UE through one UPF. In this case, the first maximum bit rate may be referred to as a UPF-AMBR of the non-uncrewed aerial vehicle service, for example, denoted as UPF-AMBR-non UAV.

For another example, the maximum bit rate is the DN-AMBR, and the first maximum bit rate may be understood as a maximum value that can be reached by a sum of bit rates of QoS flows in a session that corresponds to the non-uncrewed aerial vehicle service and that is for a connection between the UE and one DN, or may be understood as a maximum value that can be reached by a sum of bit rates of all non-GBR-type QoS flows in all sessions that correspond to the non-uncrewed aerial vehicle service and that are for a connection between the UE and one DN. In this case, the first maximum bit rate may be referred to as a DN-AMBR of the non-uncrewed aerial vehicle service, for example, denoted as DN-AMBR-non UAV.

For another example, the maximum bit rate is the UE-AMBR, and the first maximum bit rate may be understood as a maximum value that can be reached by a sum of bit rates of QoS flows of the non-uncrewed aerial vehicle service of the UE, or may be understood as a maximum value that can be reached by a sum of bit rates of all non-GBR-type QoS flows in all sessions corresponding to the non-uncrewed aerial vehicle service of the UE. In this case, the first maximum bit rate may be referred to as a UE-AMBR of the non-uncrewed aerial vehicle service, for example, denoted as UE-AMBR-non UAV.

For another example, the maximum bit rate is the UE-slice-MBR, and the first maximum bit rate may be understood as a maximum value that can be reached by a sum of bit rates of QoS flows in a session that corresponds to the non-uncrewed aerial vehicle service and that is of the UE in one slice, or may be understood as a maximum value that can be reached by a sum of bit rates of all QoS flows (including a GBR-type QoS flow and a non-GBR-type QoS flow) in all sessions that correspond to the non-uncrewed aerial vehicle service and that are of the UE in one slice. In this case, the first maximum bit rate may be referred to as a UE-slice-MBR of the non-uncrewed aerial vehicle service, for example, denoted as UE-slice-MBR-non UAV.

In other words, the first maximum bit rate may include one or more of the MFBR-non UAV, the session-AMBR-non UAV, the UPF-AMBR-non UAV, the DN-AMBR-non UAV, the UE-AMBR-non UAV, or the UE-slice-MBR-non UAV.

(2) The first priority may indicate a priority of a QoS flow of the non-uncrewed aerial vehicle service, or indicate that a priority of a QoS flow of the non-uncrewed aerial vehicle service is lower than a priority of a QoS flow of an uncrewed aerial vehicle service. The first priority may be, for example, an ARP priority. However, embodiments of this application are not limited thereto.

In this embodiment of this application, the priority of the QoS flow of the non-uncrewed aerial vehicle service is lower than the priority of the QoS flow of the uncrewed aerial vehicle service. If a larger value of a priority indicates a higher priority, a value of the first priority is less than a value of a second priority; or if a smaller value of a priority indicates a higher priority, a value of the first priority is greater than a value of a second priority. For ease of description, in the following embodiments, an example in which a smaller value of a priority indicates a higher priority is used for description. The second priority may indicate the priority of the QoS flow of the uncrewed aerial vehicle service.

For example, the value of the first priority may indicate the priority of the QoS flow of the non-uncrewed aerial vehicle service, or indicate that the priority of the QoS flow of the non-uncrewed aerial vehicle service is lower than the priority of the QoS flow of the uncrewed aerial vehicle service. The value of the first priority belongs to a first set, and a priority of a QoS flow corresponding to any element in the first set is lower than a priority of a QoS flow corresponding to any element in a second set. The first set corresponds to the non-uncrewed aerial vehicle service, the second set corresponds to the uncrewed aerial vehicle service, and the first set and the second set do not intersect. Optionally, a value of any element in the first set is greater than a value of any element in the second set. For example, the first set is {60, 62, 63, ..., 70} (or represented as 60-70), and the second set is {10, 11, 12, ..., 59} (or represented as 10-59). In this example, a problem that resources cannot be properly configured or released based on different priorities of different services because a same QoS attribute of the different services leads to a same priority of the different services can be avoided.

(3) The first identifier may indicate a QoS flow of the non-uncrewed aerial vehicle service (for example, in FIG. 3, the first identifier may indicate that a QoS flow 3, a QoS flow 4, and a QoS flow 6 are QoS flows of the non-uncrewed aerial vehicle service, and the first identifier is not shown in FIG. 3), or may indicate data of the non-uncrewed aerial vehicle service in a QoS flow (for example, in FIG. 3, the first identifier may indicate that a second half of data in a QoS flow 7 is data corresponding to the non-uncrewed aerial vehicle service, and the first identifier is not shown in FIG. 3). The data in the QoS flow may be a data packet or a group of data packets in one QoS flow. In this application, a granularity (less than one QoS flow) at which the first identifier indicates the data in the QoS flow is not limited. Unless otherwise specified, in the following embodiments, an example in which the granularity at which the first identifier indicates the data in the QoS flow is data packet is used for description.

In an example, the first identifier indicates the QoS flow of the non-uncrewed aerial vehicle service, the first identifier may be a tag (tag), and a value of the tag may indicate that the QoS flow is a QoS flow of the non-uncrewed aerial vehicle service. For example, if the value of the tag is 01, it indicates that the QoS flow indicated by the tag is a QoS flow of the non-uncrewed aerial vehicle service. It should be noted that the first identifier may be located inside the QoS flow (that is, belong to the QoS flow), or may be located outside the QoS flow (that is, not belong to the QoS flow). For example, the first identifier may be other information transmitted along with the QoS flow. This is not limited in this application.

In another example, the first identifier indicates the QoS flow of the non-uncrewed aerial vehicle service, and the first identifier may alternatively be a value of a 5QI, that is, the value of the 5QI may implicitly indicate the QoS flow of the non-uncrewed aerial vehicle service. A value of the first identifier belongs to a third set, and the third set and a fourth set do not intersect. In addition, any element in the third set indicates a QoS flow of the non-uncrewed aerial vehicle service, and any element in the fourth set indicates a QoS flow of the uncrewed aerial vehicle service. For example, the first identifier is a 5QI. The fourth set is {40, 41, 42, ..., 60} (or represented as 40-60), and the third set may be other 5QI values defined in 5G other than the fourth set. In the foregoing example, the 5QI can be used to identify the QoS flow of the non-uncrewed aerial vehicle service, and there is no need to add another identifier, so that the another identifier does not need to be added to the QoS flow, thereby saving resources.

In another example, the first identifier indicates a data packet of the non-uncrewed aerial vehicle service in a QoS flow, the first identifier may be a tag, and a value of the tag may indicate that a data packet is a data packet of the non-uncrewed aerial vehicle service. For example, if the value of the tag is 01, it indicates that the data packet indicated by the tag is a data packet of the non-uncrewed aerial vehicle service. It should be noted that the first identifier may be located inside the data packet (that is, belong to the data packet), or may be located outside the data packet (that is, not belong to the data packet). For example, the first identifier may be other information transmitted along with the data packet. This is not limited in this application.

It should be noted that the first identifier may alternatively be another identifier. This is not limited in embodiments of this application.

The UE in embodiments of this application supports the non-uncrewed aerial vehicle service and the uncrewed aerial vehicle service. The foregoing describes the first QoS parameter applicable to the non-uncrewed aerial vehicle service of the UE. For ease of understanding, the following first describes a QoS parameter (for example, denoted as a second QoS parameter) applicable to the uncrewed aerial vehicle service of the UE. To be specific, the first device may further determine the second QoS parameter corresponding to the uncrewed aerial vehicle service of the UE. It should be understood that the first device may determine the first QoS parameter corresponding to the non-uncrewed aerial vehicle service of the UE, or may determine the parameter corresponding to the uncrewed aerial vehicle service of the UE, or may determine the first QoS parameter corresponding to the non-uncrewed aerial vehicle service of the UE and the second QoS parameter corresponding to the uncrewed aerial vehicle service of the UE. In FIG. 4, an example in which the first device determines the first QoS parameter corresponding to the non-uncrewed aerial vehicle service of the UE is used.

The second QoS parameter may include one or more of the following parameters: a second maximum bit rate, a second priority, or a second identifier. The following describes the three parameters.
(1) The second maximum bit rate is a maximum bit rate corresponding to the uncrewed aerial vehicle service. For descriptions of the maximum bit rate, refer to the descriptions of the first maximum bit rate. Details are not described herein again.

For example, the maximum bit rate is the MFBR, and the second maximum bit rate may be understood as a maximum bit rate that can be reached by one QoS flow of the uncrewed aerial vehicle service of the UE, or may be understood as a maximum bit rate that can be reached by one GBR-type QoS flow of the uncrewed aerial vehicle service of the UE. In this case, the second maximum bit rate may be referred to as an MFBR of the uncrewed aerial vehicle service, for example, denoted as MFBR-UAV.

For example, the maximum bit rate is the session-AMBR, and the second maximum bit rate may be understood as a maximum value that can be reached by a sum of bit rates of QoS flows in one session corresponding to the uncrewed aerial vehicle service, or may be understood as a maximum value that can be reached by a sum of bit rates of all non-GBR-type QoS flows in one session corresponding to the uncrewed aerial vehicle service. In this case, the second maximum bit rate may be referred to as a session-AMBR of the uncrewed aerial vehicle service, for example, denoted as session-AMBR-UAV.

For another example, the maximum bit rate is the UPF-AMBR, and the second maximum bit rate may be understood as a maximum value that can be reached by a sum of bit rates of QoS flows in a session that corresponds to the uncrewed aerial vehicle service and that is for a connection of the UE through one UPF, or may be understood as a maximum value that can be reached by a sum of bit rates of all non-GBR-type QoS flows in all sessions that correspond to the uncrewed aerial vehicle service and that are for a connection of the UE through one UPF. In this case, the second maximum bit rate may be referred to as a UPF-AMBR of the uncrewed aerial vehicle service, for example, denoted as UPF-AMBR-UAV.

For another example, the maximum bit rate is the DN-AMBR, and the second maximum bit rate may be understood as a maximum value that can be reached by a sum of bit rates of QoS flows in a session that corresponds to the uncrewed aerial vehicle service and that is for a connection between the UE and one DN, or may be understood as a maximum value that can be reached by a sum of bit rates of all non-GBR-type QoS flows in all sessions that correspond to the uncrewed aerial vehicle service and that are for a connection between the UE and one DN. In this case, the second maximum bit rate may be referred to as a DN-AMBR of the uncrewed aerial vehicle service, for example, denoted as DN-AMBR-UAV.

For another example, the maximum bit rate is the UE-AMBR, and the second maximum bit rate may be understood as a maximum value that can be reached by a sum of bit rates of QoS flows of the uncrewed aerial vehicle service of the UE, or may be understood as a maximum value that can be reached by a sum of bit rates of all non-GBR-type QoS flows in all sessions corresponding to the uncrewed aerial vehicle service of the UE. In this case, the second maximum bit rate may be referred to as a UE-AMBR of the uncrewed aerial vehicle service, for example, denoted as UE-AMBR-UAV.

For another example, the maximum bit rate is the UE-slice-MBR, and the second maximum bit rate may be understood as a maximum value that can be reached by a sum of bit rates of QoS flows in a session that corresponds to the uncrewed aerial vehicle service and that is of the UE in one slice, or may be understood as a maximum value that can be reached by a sum of bit rates of all QoS flows (including a GBR-type QoS flow and a non-GBR-type QoS flow) in all sessions that correspond to the uncrewed aerial vehicle service and that are of the UE in one slice. In this case, the second maximum bit rate may be referred to as a UE-slice-MBR of the uncrewed aerial vehicle service, for example, denoted as UE-slice-MBR-UAV.

In other words, the second maximum bit rate may include one or more of the MFBR-UAV, the session-AMBR-UAV, the UPF-AMBR-UAV, the DN-AMBR-UAV, the LTE-AMBR-UAV, or the UE-slice-MBR-UAV.

(2) The second priority may indicate the priority of the QoS flow of the uncrewed aerial vehicle service, or indicate that the priority of the QoS flow of the uncrewed aerial vehicle service is higher than the priority of the QoS flow of the non-uncrewed aerial vehicle service. The second priority may be, for example, an ARP priority. However, embodiments of this application are not limited thereto.

For example, a value of the second priority may indicate the priority of the QoS flow of the uncrewed aerial vehicle service, or indicate that the priority of the QoS flow of the uncrewed aerial vehicle service is higher than the priority of the QoS flow of the non-uncrewed aerial vehicle service. The value of the second priority belongs to the second set, and a priority of a QoS flow corresponding to any element in the second set is higher than a priority of a QoS flow corresponding to any element in the first set. For descriptions about the first set and the second set, refer to content about the first priority. Details are not described herein again.

(3) The second identifier may indicate the QoS flow of the uncrewed aerial vehicle service (for example, in FIG. 3, the second identifier may indicate that a QoS flow 1, a QoS flow 2, and a QoS flow 5 are QoS flows of the uncrewed aerial vehicle service, and the second identifier is not shown in FIG. 3), or may indicate data of the uncrewed aerial vehicle service in a QoS flow (for example, in FIG. 3, the second identifier may indicate that a first half of data in a QoS flow 7 is data corresponding to the uncrewed aerial vehicle service, and the second identifier is not shown in FIG. 3). The data in the QoS flow may be a data packet or a group of data packets in one QoS flow. In this application, a granularity (less than one QoS flow) at which the second identifier indicates the data in the QoS flow is not limited. Unless otherwise specified, in the following embodiments, an example in which the granularity at which the second identifier indicates the data in the QoS flow is data packet is used for description.

In an example, the second identifier indicates the QoS flow of the non-uncrewed aerial vehicle service, the first identifier may be a tag (tag), and a value of the tag may indicate that the QoS flow is a QoS flow of the uncrewed aerial vehicle service. For example, if the value of the tag is 00, it indicates that the QoS flow indicated by the tag is a QoS flow of the uncrewed aerial vehicle service. It should be noted that the second identifier may be located inside the QoS flow, or may be located outside the QoS flow. This is not limited in this application.

In another example, the second identifier indicates the QoS flow of the uncrewed aerial vehicle service, and the second identifier may alternatively be a value of a 5QI, that is, the value of the 5QI may implicitly indicate the QoS flow of the uncrewed aerial vehicle service. A value of the second identifier belongs to the fourth set. For descriptions about the fourth set, refer to content about the first identifier. Details are not described herein again. In the foregoing example, the 5QI can be used to identify the QoS flow of the uncrewed aerial vehicle service, and there is no need to add another identifier, so that the another identifier does not need to be added to the QoS flow, thereby saving resources.

In another example, the second identifier indicates a data packet of the uncrewed aerial vehicle service in a QoS flow, the second identifier may be a tag, and a value of the tag may indicate that a data packet is a data packet of the uncrewed aerial vehicle service. For example, if the value of the tag is 00, it indicates that the data packet indicated by the tag is a data packet of the uncrewed aerial vehicle service. It should be noted that the second identifier may be located inside the data packet, or may be located outside the data packet. This is not limited in this application.

It should be noted that the second identifier may alternatively be another identifier. This is not limited in embodiments of this application.

In S401, the first device determines the first QoS parameter corresponding to the non-uncrewed aerial vehicle service of the UE. For example, the first device is an SMF, and the first device may configure (or allocate) the first priority for the non-uncrewed aerial vehicle service of the UE, for example, allocate the first priority based on the first set; or the first device may configure (or allocate) the first identifier for the non-uncrewed aerial vehicle service of the UE, for example, allocate the first identifier based on the third set; or the first device configures (or allocates) the first priority and the first identifier for the non-uncrewed aerial vehicle service of the UE. For another example, the first device is an SMF, an AMF, or a PCF, and the first device may determine the first maximum bit rate based on subscription information and/or authorization information.

The following describes the subscription information and the authorization information.
(1) The subscription information may include one or more of a first bit rate, a second bit rate, or a fifth bit rate.

The first bit rate may be understood as a maximum bit rate that corresponds to the non-uncrewed aerial vehicle service and to which the UE subscribes, or may be understood as a maximum bit rate that is applicable to the non-uncrewed aerial vehicle service and to which the UE subscribes. The second bit rate may be understood as a maximum bit rate that corresponds to the uncrewed aerial vehicle service and to which the UE subscribes, or may be understood as a maximum bit rate that is applicable to the uncrewed aerial vehicle service and to which the UE subscribes. The fifth bit rate may be understood as a maximum bit rate that corresponds to the uncrewed aerial vehicle service and the non-uncrewed aerial vehicle service and to which the UE subscribes, or may be understood as a maximum bit rate that is applicable to the non-uncrewed aerial vehicle service and the uncrewed aerial vehicle service and to which the UE subscribes. For example, if the maximum bit rate is the MFBR, the first bit rate is MFBR-non UAV to which the UE subscribes, the second bit rate is MFBR-UAV to which the UE subscribes, and the fifth bit rate is an MFBR (or denoted as MFBR-all) to which the UE subscribes. For another example, if the maximum bit rate is the session-AMBR, the first bit rate is session-AMBR-non UAV to which the UE subscribes, the second bit rate is session-AMBR-UAV to which the UE subscribes, and the fifth bit rate is a session-AMBR (or denoted as session-AMBR-all) to which the UE subscribes. It should be understood that a case in which the maximum bit rate is the UPF-AMBR, the DN-AMBR, the UE-AMBR, or the UE-slice-MBR is similar to this, and is not enumerated herein.

It should be noted that the maximum bit rate corresponding to the uncrewed aerial vehicle service and the non-uncrewed aerial vehicle service may be understood as a sum of the maximum bit rate corresponding to the uncrewed aerial vehicle service and the maximum bit rate corresponding to the non-uncrewed aerial vehicle service. If service types of the UE are classified into the uncrewed aerial vehicle service and the non-uncrewed aerial vehicle service, the maximum bit rate corresponding to the uncrewed aerial vehicle service and the non-uncrewed aerial vehicle service may alternatively be understood as a maximum bit rate for which services are not distinguished, or may be understood as a maximum bit rate corresponding to all services.

In an optional implementation, the subscription information may further include one or more of first indication information, second indication information, or sixth indication information. The first indication information may indicate that the first bit rate is applicable to the non-uncrewed aerial vehicle service. For example, if the subscription information includes the first bit rate, the subscription information may further include the first indication information. The second indication information may indicate that the second bit rate is applicable to the uncrewed aerial vehicle service. For example, if the subscription information includes the second bit rate, the subscription information may further include the second indication information. The sixth indication information may indicate that the fifth bit rate is applicable to the uncrewed aerial vehicle service and the non-uncrewed aerial vehicle service. For example, if the subscription information includes the fifth bit rate, the subscription information may further include the sixth indication information.

The subscription information may be subscription information from a UDM. That is, the first device may receive the subscription information from the UDM. For example, the UDM actively pushes the subscription information to the first device. For example, the UDM sends the subscription information to the first device after updating the subscription information. Correspondingly, the first device receives the subscription information from the UDM. For another example, the first device sends, to the UDM, a message used to request to obtain the subscription information; the UDM sends the subscription information to the first device in response to the message; and correspondingly, the first device receives the subscription information from the UDM.

Alternatively, the subscription information may be subscription information stored in the first device. That is, the first device may obtain the stored subscription information. The subscription information stored in the first device may be understood as subscription information configured (or maintained) by the first device, or may be understood as stored subscription information of a UDM. Embodiments of this application are not limited thereto.

(2) The authorization information may include one or more of a third bit rate, a fourth bit rate, or a sixth bit rate.

The third bit rate may be understood as a maximum bit rate that corresponds to the non-uncrewed aerial vehicle service and that is authorized to the UE, or may be understood as a maximum bit rate that is applicable to the non-uncrewed aerial vehicle service and that is authorized to the UE. The fourth bit rate may be understood as a maximum bit rate that corresponds to the uncrewed aerial vehicle service and that is authorized to the UE, or may be understood as a maximum bit rate that is applicable to the uncrewed aerial vehicle service and that is authorized to the UE. The sixth bit rate may be understood as a maximum bit rate that corresponds to the uncrewed aerial vehicle service and the non-uncrewed aerial vehicle service and that is authorized to the UE, or may be understood as a maximum bit rate that is applicable to the non-uncrewed aerial vehicle service and the uncrewed aerial vehicle service and that is authorized to the UE. For example, if the maximum bit rate is the UPF-AMBR, the third bit rate is UPF-AMBR-non UAV authorized to the UE, the fourth bit rate is UPF-AMBR-UAV authorized to the UE, and the sixth bit rate is a UPF-AMBR (or denoted as UPF-AMBR-all) authorized to the UE. For another example, if the maximum bit rate is the DN-AMBR, the third bit rate is DN-AMBR-non UAV authorized to the UE, the fourth bit rate is DN-AMBR-UAV authorized to the UE, and the sixth bit rate is a DN-AMBR (or denoted as DN-AMB-all) authorized to the UE. It should be understood that a case in which the maximum bit rate is the MFBR, the session-AMBR, the UE-AMBR, or the UE-slice-MBR is similar to this, and is not enumerated herein. In addition, for descriptions of a maximum bit rate corresponding to the uncrewed aerial vehicle service and the non-uncrewed aerial vehicle service, refer to related descriptions of the subscription information. Details are not described herein again.

In an optional implementation, the authorization information may further include one or more of third indication information, fourth indication information, or seventh indication information. The third indication information may indicate that the third bit rate is applicable to the non-uncrewed aerial vehicle service. For example, if the authorization information includes the third bit rate, the authorization information may further include the third indication information. The fourth indication information may indicate that the fourth bit rate is applicable to the uncrewed aerial vehicle service. For example, if the authorization information includes the fourth bit rate, the authorization information may further include the fourth indication information. The seventh indication information may indicate that the sixth bit rate is applicable to the uncrewed aerial vehicle service and the non-uncrewed aerial vehicle service. For example, if the authorization information includes the sixth bit rate, the authorization information may further include the seventh indication information.

The authorization information may be authorization information from a DN or a PCF. That is, the first device may receive the authorization information from the DN or the PCF. For example, the DN (or the PCF) actively pushes the authorization information to the first device. For example, the DN (or the PCF) sends the authorization information to the first device after updating the authorization information. Correspondingly, the first device receives the authorization information from the DN (or the PCF). For another example, the first device sends, to the DN (or the PCF), a message used to request to obtain the authorization information; the DN (or the PCF) sends a response message to the first device, where the response message includes the authorization information; and correspondingly, the first device receives the authorization information from the DN (or the PCF).

Alternatively, the authorization information may be authorization information stored in the first device. That is, the first device may obtain the stored authorization information. The authorization information stored in the first device may be understood as authorization information configured (or maintained) by the first device, or may be understood as stored authorization information of a DN or a PCF. Embodiments of this application are not limited thereto.

In the foregoing embodiment, the first device receives the response message from the DN (or the PCF), where the response message includes the authorization information. In an optional implementation, the response message may further include eighth indication information and/or ninth indication information.

The eighth indication information may indicate that the authorization information is not applicable to the non-uncrewed aerial vehicle service. In this case, the authorization information may not include the third bit rate, or a value of the third bit rate included in the authorization information is 0. For example, a bit rate included in the authorization information is a session-AMBR, and the eighth indication information may indicate that the session does not support (or does not allow) the non-uncrewed aerial vehicle service. Correspondingly, the session-AMBR is not applicable to the non-uncrewed aerial vehicle service. For example, a bit rate included in the authorization information is a UPF-AMBR, and the eighth indication information may indicate that the UPF does not support (or does not allow) the non-uncrewed aerial vehicle service. Correspondingly, the UPF-AMBR is not applicable to the non-uncrewed aerial vehicle service. For another example, a bit rate included in the authorization information is a DN-AMBR, and the eighth indication information may indicate that the DN does not support (or does not allow) the non-uncrewed aerial vehicle service. Correspondingly, the DN-AMBR is not applicable to the non-uncrewed aerial vehicle service. For another example, a bit rate included in the authorization information is a UE-AMBR, and the eighth indication information may indicate that the UE does not support (or does not allow) the non-uncrewed aerial vehicle service. Correspondingly, the UE-AMBR is not applicable to the non-uncrewed aerial vehicle service. For another example, a bit rate included in the authorization information is a UE-slice-MBR, and the eighth indication information may indicate that the slice does not support (or does not allow) the non-uncrewed aerial vehicle service. Correspondingly, the UE-slice-MBR is not applicable to the non-uncrewed aerial vehicle service.

The ninth indication information may indicate whether a QoS flow of the UE is controlled based on a service type. For example, the ninth indication information indicates that the QoS flow of the UE is controlled based on the service type. In this case, the authorization information may include the third bit rate and/or the fourth bit rate. For another example, the ninth indication information indicates that the QoS flow of the UE is not controlled based on the service type. In this case, the authorization information may include the sixth bit rate.

The foregoing describes the subscription information and the authorization information in embodiments of this application. The following describes a specific implementation process in which the first device determines the first maximum bit rate based on the subscription information and/or the authorization information.

In an example, the first device determines the first maximum bit rate based on the subscription information. For example, the first device may obtain the first bit rate or obtain the first bit rate and the second bit rate based on the subscription information. In this example, the first bit rate is the first maximum bit rate. For example, the subscription information includes the first bit rate, and the first device may determine the first bit rate as the first maximum bit rate. Further, if the subscription information further includes the fifth bit rate, the first device may further determine a difference between the fifth bit rate and the first bit rate as the second bit rate. For another example, the subscription information includes the second bit rate and the fifth bit rate, and the first device may determine a difference between the fifth bit rate and the second bit rate as the first maximum bit rate. For another example, the subscription information includes the second bit rate, and the first device may determine that the first maximum bit rate is 0, that is, the non-uncrewed aerial vehicle service is not allowed.

In another example, the first device determines the first maximum bit rate based on the authorization information. For example, the first device may obtain the third bit rate or obtain the third bit rate and the fourth bit rate based on the authorization information. In this example, the third bit rate is the first maximum bit rate. For example, the authorization information includes the third bit rate, and the first device may determine the third bit rate as the first maximum bit rate. Further, if the authorization information further includes the sixth bit rate, the first device may further determine a difference between the sixth bit rate and the third bit rate as the fourth bit rate. For another example, the authorization information includes the fourth bit rate and the sixth bit rate, and the first device may determine a difference between the sixth bit rate and the fourth bit rate as the first maximum bit rate. For another example, the authorization information includes the fourth bit rate, and the first device may determine that the first maximum bit rate is 0, that is, the non-uncrewed aerial vehicle service is not allowed.

In another example, the first device determines the first maximum bit rate based on the subscription information and the authorization information.

For example, the subscription information includes the first bit rate, the authorization information includes the fourth bit rate or the sixth bit rate, and the first device may determine the first bit rate as the first maximum bit rate. Alternatively, the subscription information includes the first bit rate, the authorization information includes the fourth bit rate and the sixth bit rate, and the first device may determine the first bit rate or a difference between the sixth bit rate and the fourth bit rate as the first maximum bit rate. For example, a smaller value in the first bit rate and the difference between the sixth bit rate and the fourth bit rate is the first maximum bit rate. Alternatively, the subscription information includes the first bit rate, the authorization information includes the third bit rate (or further includes the fourth bit rate and/or the sixth bit rate), and the first device may determine the first bit rate or the third bit rate as the first maximum bit rate. For example, a smaller value in the first bit rate and the third bit rate is the first maximum bit rate.

For another example, the subscription information includes the second bit rate, the authorization information includes the third bit rate (or further includes the fourth bit rate and/or the sixth bit rate), and the first device may determine the third bit rate as the first maximum bit rate. Alternatively, the subscription information includes the second bit rate, the authorization information includes the sixth bit rate, and the first device may determine a difference between the sixth bit rate and the second bit rate as the first maximum bit rate. Alternatively, the subscription information includes the second bit rate, the authorization information includes the fourth bit rate and the sixth bit rate, and the first device may determine a difference between the sixth bit rate and the second bit rate or a difference between the fourth bit rate and the second bit rate as the first maximum bit rate. Alternatively, the subscription information includes the second bit rate, the authorization information includes the fourth bit rate, and the first device may determine that the first maximum bit rate is 0, that is, the non-uncrewed aerial vehicle service is not allowed.

For another example, the subscription information includes the fifth bit rate, the authorization information includes the third bit rate (or further includes the fourth bit rate and/or the sixth bit rate), and the first device may determine the third bit rate as the first maximum bit rate. Alternatively, the subscription information includes the fifth bit rate, the authorization information includes the fourth bit rate, and the first device may determine a difference between the fifth bit rate and the fourth bit rate as the first maximum bit rate. Alternatively, the subscription information includes the fifth bit rate, the authorization information includes the fourth bit rate and the sixth bit rate, and the first device may determine a difference between the fifth bit rate and the fourth bit rate or a difference between the sixth bit rate and the fourth bit rate as the first maximum bit rate.

For another example, the subscription information includes the second bit rate and the fifth bit rate, the authorization information includes the third bit rate (or further includes the fourth bit rate and/or the sixth bit rate), and the first device may determine the third bit rate or a difference between the fifth bit rate and the second bit rate as the first maximum bit rate. Alternatively, the subscription information includes the second bit rate and the fifth bit rate, the authorization information includes the fourth bit rate, and the first device may determine a difference between the fifth bit rate and the second bit rate or a difference between the fifth bit rate and the fourth bit rate as the first maximum bit rate. Alternatively, the subscription information includes the second bit rate and the fifth bit rate, the authorization information includes the sixth bit rate, and the first device may determine a difference between the fifth bit rate and the second bit rate or a difference between the sixth bit rate and the second bit rate as the first maximum bit rate. Alternatively, the subscription information includes the second bit rate and the fifth bit rate, the authorization information includes the fourth bit rate and the sixth bit rate, and the first device may determine a difference between the fifth bit rate and the second bit rate or a difference between the sixth bit rate and the fourth bit rate as the first maximum bit rate.

In an optional implementation, the first device is an SMF or an AMF, and the first device may send a first message to a PCF, where the first message is used to request a QoS parameter corresponding to the non-uncrewed aerial vehicle service of the UE. Correspondingly, after receiving the first message, the PCF sends a second message to the first device, where the second message includes the first QoS parameter. For example, after receiving the first message, the PCF may determine the first QoS parameter, and send the first QoS parameter to the first device. For a specific implementation process in which the PCF determines the first QoS parameter, refer to the foregoing content in which the first device determines the first QoS parameter. Details are not described herein. Optionally, the first message may include authorization information authorized by a DN, or include subscription information, or include authorization information authorized by a DN and subscription information.

In another optional implementation, after obtaining the first QoS parameter, the first device may send the first QoS parameter to a PCF. For example, the first QoS parameter is carried in a first message and sent to the PCF. After receiving the first QoS parameter, the PCF may authorize the first QoS parameter, for example, authorize the first QoS parameter based on authorization information authorized by the PCF, and send a response message to the first device. If the first QoS parameter is authorized by the PCF, the response message may be, for example, an acknowledgment (acknowledgment, ACK) message, and may indicate that authorization succeeds; or if the first QoS parameter is not authorized by the PCF, the response message may be, for example, a negative acknowledgment (negative acknowledgment, NACK) message, and may indicate that authorization fails. Optionally, the PCF may determine a QoS parameter corresponding to the non-uncrewed aerial vehicle service of the UE, and send the determined QoS parameter as the authorized first QoS parameter to the first device.

In another possible implementation, the first device may send authorization information of a DN to a PCF. After receiving the authorization information of the DN, the PCF may authorize the authorization information of the DN. Optionally, the PCF may determine authorization information of the PCF based on the authorization information of the DN, and send the authorization information of the PCF to the first device. Then, the first device may determine the first maximum bit rate based on the information authorized by the PCF.

In the foregoing implementation, the PCF may perform one or more of the following: determining the first QoS parameter, authorizing the first QoS parameter determined by the first device, or authorizing the authorization information of the DN. In an optional implementation, the PCF may perform, based on policy information or a policy and charging control rule (policy and charging control rules), one or more of the following: determining the first QoS parameter, authorizing the first QoS parameter determined by the first device, or authorizing the authorization information of the DN. The policy information may include a QoS parameter corresponding to the uncrewed aerial vehicle service, a QoS parameter corresponding to the non-uncrewed aerial vehicle service, and a QoS parameter for which service types are not distinguished. The policy and charging control rule may include a QoS parameter corresponding to the uncrewed aerial vehicle service, a QoS parameter corresponding to the non-uncrewed aerial vehicle service, and a QoS parameter for which service types are not distinguished. The QoS parameter for which service types are not distinguished may be understood as a QoS parameter applicable to all services (or any service).

For example, the PCF authorizes the authorization information of the DN, the policy information includes the third bit rate, the fourth bit rate, and the sixth bit rate, and the policy and charging control rule includes the third bit rate, the fourth bit rate, and the sixth bit rate. The PCF receives a request message from the first device, where the request message is used to request to authorize the authorization information of the DN, and the request message includes the authorization information of the DN. After receiving the request message, the PCF may determine, based on a service type corresponding to the authorization information of the DN, preconfigured (or subscribed or default) policy information (or charging control rule) for the service type, and authorize the authorization information of the DN based on the policy information (or charging control rule), to obtain authorization information of the PCF. Alternatively, the request message includes tenth indication information, and the tenth indication information may be, for example, an authorization information index (authorization profile index), and indicate policy information or a charging control rule. Correspondingly, after receiving the request message, the PCF may authorize the authorization information of the DN based on the policy information or the charging control rule indicated by the tenth indication information, to obtain authorization information of the PCF. For example, the request message sent by the first device to the PCF includes the sixth bit rate and the tenth indication information. After receiving the request message, the PCF authorizes the sixth bit rate based on the policy information or the charging control rule indicated by the tenth indication information, to obtain the authorization information of the PCF. The authorization information of the PCF includes the third bit rate, the fourth bit rate, and the sixth bit rate.

It should be noted that, for a specific implementation process in which the PCF determines the first QoS parameter or authorizes the first QoS parameter determined by the first device, refer to the descriptions in which the PCF authorizes the authorization information of the DN. Details are not described herein.

As mentioned above, the first device may further determine the second QoS parameter corresponding to the uncrewed aerial vehicle service. For example, the first device is an SMF, and the first device may configure (or allocate) the second priority for the uncrewed aerial vehicle service of the UE, for example, allocate the second priority based on the second set; or the first device may configure (or allocate) the second identifier for the uncrewed aerial vehicle service of the UE, for example, allocate the second identifier based on the fourth set; or the first device configures (or allocates) the second priority and the second identifier for the uncrewed aerial vehicle service of the UE. For another example, the first device is an SMF, an AMF, or a PCF, and the first device may determine the second maximum bit rate based on subscription information and/or authorization information.

In an example, the first device determines the second maximum bit rate based on the subscription information. For example, the first device may obtain the second bit rate or obtain the first bit rate and the second bit rate based on the subscription information. In this example, the second bit rate is the second maximum bit rate. For example, the subscription information includes the second bit rate, and the first device may determine the second bit rate as the second maximum bit rate. Further, if the subscription information further includes the fifth bit rate, the first device may further determine a difference between the fifth bit rate and the second bit rate as the first bit rate. For another example, the subscription information includes the first bit rate and the fifth bit rate, and the first device may determine a difference between the fifth bit rate and the first bit rate as the second maximum bit rate.

In another example, the first device determines the second maximum bit rate based on the authorization information. For example, the first device may obtain the fourth bit rate or obtain the third bit rate and the fourth bit rate based on the authorization information. In this example, the fourth bit rate is the second maximum bit rate. For example, the authorization information includes the fourth bit rate, and the first device may determine the fourth bit rate as the second maximum bit rate. Further, if the authorization information further includes the sixth bit rate, the first device may further determine a difference between the sixth bit rate and the fourth bit rate as the third bit rate. For another example, the authorization information includes the third bit rate and the sixth bit rate, and the first device may determine a difference between the sixth bit rate and the third bit rate as the second maximum bit rate.

In another example, the first device determines the second maximum bit rate based on the subscription information and the authorization information.

For example, the subscription information includes the second bit rate, the authorization information includes the third bit rate or the sixth bit rate, and the first device may determine the second bit rate as the second maximum bit rate. Alternatively, the subscription information includes the second bit rate, the authorization information includes the third bit rate and the sixth bit rate, and the first device may determine the second bit rate or a difference between the sixth bit rate and the third bit rate as the second maximum bit rate. For example, a smaller value in the second bit rate and the difference between the sixth bit rate and the third bit rate is the second maximum bit rate. Alternatively, the subscription information includes the second bit rate, the authorization information includes the fourth bit rate (or further includes the third bit rate and/or the sixth bit rate), and the first device may determine the second bit rate or the fourth bit rate as the second maximum bit rate. For example, a smaller value in the second bit rate and the fourth bit rate is the second maximum bit rate.

For another example, the subscription information includes the first bit rate, the authorization information includes the fourth bit rate (or further includes the third bit rate and/or the sixth bit rate), and the first device may determine the fourth bit rate as the second maximum bit rate. Alternatively, the subscription information includes the first bit rate, the authorization information includes the sixth bit rate, and the first device may determine a difference between the sixth bit rate and the first bit rate as the second maximum bit rate. Alternatively, the subscription information includes the first bit rate, the authorization information includes the third bit rate and the sixth bit rate, and the first device may determine a difference between the sixth bit rate and the first bit rate or a difference between the third bit rate and the first bit rate as the second maximum bit rate.

For another example, the subscription information includes the fifth bit rate, the authorization information includes the fourth bit rate (or further includes the third bit rate and/or the sixth bit rate), and the first device may determine the fourth bit rate as the second maximum bit rate. Alternatively, the subscription information includes the fifth bit rate, the authorization information includes the third bit rate, and the first device may determine a difference between the fifth bit rate and the third bit rate as the second maximum bit rate. Alternatively, the subscription information includes the fifth bit rate, the authorization information includes the third bit rate and the sixth bit rate, and the first device may determine a difference between the fifth bit rate and the third bit rate or a difference between the sixth bit rate and the third bit rate as the second maximum bit rate.

For another example, the subscription information includes the first bit rate and the fifth bit rate, the authorization information includes the fourth bit rate (or further includes the third bit rate and/or the sixth bit rate), and the first device may determine the fourth bit rate or a difference between the fifth bit rate and the first bit rate as the second maximum bit rate. Alternatively, the subscription information includes the first bit rate and the fifth bit rate, the authorization information includes the third bit rate, and the first device may determine a difference between the fifth bit rate and the first bit rate or a difference between the fifth bit rate and the third bit rate as the second maximum bit rate. Alternatively, the subscription information includes the first bit rate and the fifth bit rate, the authorization information includes the sixth bit rate, and the first device may determine a difference between the fifth bit rate and the first bit rate or a difference between the sixth bit rate and the first bit rate as the second maximum bit rate. Alternatively, the subscription information includes the first bit rate and the fifth bit rate, the authorization information includes the third bit rate and the sixth bit rate, and the first device may determine a difference between the fifth bit rate and the first bit rate or a difference between the sixth bit rate and the third bit rate as the first maximum bit rate.

It should be noted that the first device may also send, to the PCF, a request message used to request a QoS parameter corresponding to the uncrewed aerial vehicle service of the UE, and receive the second QoS parameter from the PCF. Alternatively, the first device may further send the determined second QoS parameter to the PCF, so that the PCF authorizes the second QoS parameter. For a specific implementation process, refer to the foregoing descriptions about the first QoS parameter. Details are not described herein.

S402: The first device sends the first QoS parameter to a second device, and correspondingly, the second device receives the first QoS parameter from the first device.

The first device may send the first QoS parameter to the second device. If the first device is a PCF, the second device may be one or more of an SMF, an AMF, UE, a UPF, or a RAN; or if the first device is an SMF or an AMF, the second device may be one or more of UE, a UPF, or a RAN. When the first device is a PCF, and the second device is an SMF and/or an AMF, after receiving the first QoS parameter, the second device sends the first QoS parameter to the UE (or a UPF or a RAN), and the UE (or the UPF or the RAN) performs content in S403.

When the first QoS parameter includes one or more of session-AMBR-non UAV, UPF-AMBR-non UAV, or DN-AMBR-non UAV, the first device may send the first QoS parameter to the UE, or send the first QoS parameter to the UPF, or send the first QoS parameter to the UE and the UPF. Alternatively, when the first QoS parameter includes one or more of MFBR-non UAV, UE-AMBR-non UAV, or UE-slice-MBR-non UAV, the first device may send the first QoS parameter to the UE, or send the first QoS parameter to the RAN, or send the first QoS parameter to the UE and the RAN.

Optionally, the first device may further send fifth indication information to the second device, and the fifth indication information may indicate that the first QoS parameter is applicable to the non-uncrewed aerial vehicle service.

In an optional implementation, the first device may send the second QoS parameter to the second device. Correspondingly, the second device receives the second QoS parameter from the first device. When the second QoS parameter includes one or more of session-AMBR-UAV, UPF-AMBR-UAV, or DN-AMBR-UAV, the first device may send the second QoS parameter to the UE, or send the second QoS parameter to the UPF, or send the second QoS parameter to the UE and the UPF. Alternatively, when the second QoS parameter includes one or more of MFBR-UAV, UE-AMBR-UAV, or UE-slice-MBR-UAV, the first device may send the second QoS parameter to the UE, or send the second QoS parameter to the RAN, or send the second QoS parameter to the UE and the RAN.

Optionally, the first device may further send, to the second device, indication information indicating that the second QoS parameter is applicable to the uncrewed aerial vehicle service.

S403: The second device controls (or restricts) the QoS flow of the non-uncrewed aerial vehicle service of the UE based on the first QoS parameter.

In S403, the second device may be one or more of UE, a UPF, or a RAN.

In an optional implementation, the second device is UE and/or a UPF, and the second device may determine a service type of each of a plurality of data packets, and map the plurality of data packets to at least one QoS flow. The plurality of data packets include a data packet of the non-uncrewed aerial vehicle service and/or a data packet of the uncrewed aerial vehicle service. The service type includes the non-uncrewed aerial vehicle service and the uncrewed aerial vehicle service. For example, when the plurality of data packets include the data packet of the non-uncrewed aerial vehicle service, the at least one QoS flow may include the QoS flow of the non-uncrewed aerial vehicle service (that is, all data packets in the QoS flow are data packets of the non-uncrewed aerial vehicle service). For another example, when the plurality of data packets include the data packet of the uncrewed aerial vehicle service, the at least one QoS flow may include the QoS flow of the uncrewed aerial vehicle service (that is, all data packets in the QoS flow are data packets of the uncrewed aerial vehicle service). For another example, when the plurality of data packets include the data packet of the non-uncrewed aerial vehicle service and the data packet of the uncrewed aerial vehicle service, the at least one QoS flow may include the QoS flow of the non-uncrewed aerial vehicle service and the QoS flow of the uncrewed aerial vehicle service. Optionally, when the plurality of data packets include the data packet of the non-uncrewed aerial vehicle service and the data packet of the uncrewed aerial vehicle service, the at least one QoS flow may alternatively include a QoS flow of a hybrid service. In other words, the QoS flow of the hybrid service includes both the data packet of the non-uncrewed aerial vehicle service and the data packet of the uncrewed aerial vehicle service, as shown in the QoS flow 7 in FIG. 3. For ease of understanding, in this embodiment of this application, an example in which the plurality of data packets include the data packet of the non-uncrewed aerial vehicle service and the data packet of the uncrewed aerial vehicle service is used.

In an example, the first QoS parameter includes the first identifier, and the second device may add the first identifier to the QoS flow of the non-uncrewed aerial vehicle service. Optionally, the second device receives the second QoS parameter from the first device, where the second QoS parameter includes the second identifier, and the second device may add the second identifier to the QoS flow of the uncrewed aerial vehicle service. Optionally, if the first QoS parameter includes the first identifier, the second device receives the second QoS parameter from the first device, and the second QoS parameter includes the second identifier, the second device may add the first identifier to the QoS flow of the non-uncrewed aerial vehicle service and add the second identifier to the QoS flow of the uncrewed aerial vehicle service; and/or the second device may add the first identifier to a data packet of the non-uncrewed aerial vehicle service in the QoS flow of the hybrid service and add the second identifier to a data packet of the uncrewed aerial vehicle service in the QoS flow of the hybrid service.

It should be noted that when the first QoS parameter does not include the first identifier, the second device may alternatively perform, based on a stored identifier (for example, a default identifier), a step of adding an identifier to a QoS flow and/or a data packet of the QoS flow. Similarly, when the second QoS parameter does not include the second identifier, the second device may alternatively perform, based on a stored identifier (for example, a default identifier), the foregoing step of adding an identifier to a QoS flow and/or a data packet of the QoS flow.

Downlink data is used as an example. The second device is a UPF, and the second device may receive a data flow that includes a plurality of data packets and that is from a DN, classify the plurality of data packets according to a packet detection rule (packet detection rule, PDR) or the like, and map the plurality of data packets to at least one QoS flow. In other words, the second device may classify the plurality of data packets into a data packet of the uncrewed aerial vehicle service and a data packet of the non-uncrewed aerial vehicle service based on a service type, and map the plurality of data packets to the at least one QoS flow according to the PDR. Further, in a process in which the second device maps the plurality of data packets to the at least one QoS flow, the second device may further perform one or more of the following based on the service type: adding the first identifier to the QoS flow of the non-uncrewed aerial vehicle service, adding the second identifier to the QoS flow of the uncrewed aerial vehicle service, adding the first identifier to a data packet of the non-uncrewed aerial vehicle service in a QoS flow of a hybrid service, or adding the second identifier to a data packet of the uncrewed aerial vehicle service in a QoS flow of a hybrid service.

Uplink data is used as an example. The second device is UE, and the second device may classify, according to a QoS rule (QoS rule) or the like, a data flow that is from an application layer of the second device and that includes a plurality of data packets, and map the data flow to at least one QoS flow. In other words, the second device may classify the plurality of data packets into a data packet of the uncrewed aerial vehicle service and a data packet of the non-uncrewed aerial vehicle service based on a service type, and map the plurality of data packets to the at least one QoS flow according to the QoS rule. Further, in a process in which the second device maps the plurality of data packets to the at least one QoS flow, the second device may further perform one or more of the following based on the service type: adding the first identifier to the QoS flow of the non-uncrewed aerial vehicle service, adding the second identifier to the QoS flow of the uncrewed aerial vehicle service, adding the first identifier to a data packet of the non-uncrewed aerial vehicle service in a QoS flow of a hybrid service, or adding the second identifier to a data packet of the uncrewed aerial vehicle service in a QoS flow of a hybrid service.

It should be understood that when a plurality of QoS flows do not include a QoS flow of a hybrid service, if the second device adds the first identifier to some QoS flows in the plurality of QoS flows, remaining QoS flows in the plurality of QoS flows may be understood as QoS flows of the uncrewed aerial vehicle service although the remaining QoS flows do not include the second identifier; or if the second device adds the second identifier to some QoS flows in the plurality of QoS flows, remaining QoS flows in the plurality of QoS flows may be understood as QoS flows of the non-uncrewed aerial vehicle service although the remaining QoS flows do not include the first identifier. Similarly, if the second device adds the first identifier to some data packets in a QoS flow, remaining data packets in the QoS flow may be understood as data packets of the uncrewed aerial vehicle service although the remaining data packets do not include the second identifier. If the second device adds the second identifier to some data packets in a QoS flow, remaining data packets in the QoS flow may be understood as data packets of the non-uncrewed aerial vehicle service although the remaining data packets do not include the first identifier.

It should be noted that the second device may distinguish between QoS flows of different services and/or data packets in a QoS flow by using parameters related to the data packet, such as a (source/destination) address, a port (port) number, a UE identifier (such as a UAV identity, a GPSI, or a UE ID), a session association identifier, a 5QI, a DN or a data network name (DN name, DNN), a USS identifier, and slice information. This application is not limited thereto.

It should be noted that the second device maps the plurality of data packets to the at least one QoS flow based on any one of a classification method (classifier), a rule (rule), a data packet filtering method (packet filters), a PDR, or a mapping method (for example, a traffic flow template (traffic flow template, TFT traffic flow template) or a service data flow template (service data flow Templates, SDF Templates)). However, embodiments of this application are not limited thereto.

In another optional implementation, the second device is a RAN, and the second device may receive at least one QoS flow from the UE (and/or the UPF), and may perform one or more of the following: determining the QoS flow of the non-uncrewed aerial vehicle service from the at least one QoS flow, determining the QoS flow of the uncrewed aerial vehicle service from the at least one QoS flow, determining a data packet of the non-uncrewed aerial vehicle service from the at least one QoS flow, or determining a data packet of the uncrewed aerial vehicle service from the at least one QoS flow.

For example, the second device may determine one or more of the QoS flow of the non-uncrewed aerial vehicle service, the QoS flow of the uncrewed aerial vehicle service, the data packet of the non-uncrewed aerial vehicle service, or the data packet of the uncrewed aerial vehicle service based on a service type of a data packet in each of the at least one QoS flow.

For another example, the first QoS parameter includes the first identifier, and the second device may determine the QoS flow of the non-uncrewed aerial vehicle service and/or the data packet of the non-uncrewed aerial vehicle service from the at least one QoS flow based on the first identifier. Optionally, when the at least one QoS flow does not include a QoS flow of a hybrid service, the second device may determine that a QoS flow other than the QoS flow of the non-uncrewed aerial vehicle service in the at least one QoS flow is the QoS flow of the uncrewed aerial vehicle service. Alternatively, when the at least one QoS flow includes a QoS flow of a hybrid service, the second device may determine that a QoS flow other than the QoS flow of the non-uncrewed aerial vehicle service and the QoS flow of the hybrid service in the at least one QoS flow is the QoS flow of the uncrewed aerial vehicle service. Further, the second device may further determine that a data packet other than the data packet of the non-uncrewed aerial vehicle service in the QoS flow of the hybrid service is the data packet of the uncrewed aerial vehicle service.

For another example, the second QoS parameter includes the second identifier, and the second device may determine the QoS flow of the uncrewed aerial vehicle service and/or the data packet of the uncrewed aerial vehicle service from the at least one QoS flow based on the second identifier. Optionally, when the at least one QoS flow does not include a QoS flow of a hybrid service, the second device may determine that a QoS flow other than the QoS flow of the uncrewed aerial vehicle service in the at least one QoS flow is the QoS flow of the non-uncrewed aerial vehicle service. Alternatively, when the at least one QoS flow includes a QoS flow of a hybrid service, the second device may determine that a QoS flow other than the QoS flow of the uncrewed aerial vehicle service and the QoS flow of the hybrid service in the at least one QoS flow is the QoS flow of the non-uncrewed aerial vehicle service. Further, the second device may further determine that a data packet other than the data packet of the uncrewed aerial vehicle service in the QoS flow of the hybrid service is the data packet of the non-uncrewed aerial vehicle service.

For another example, the first QoS parameter includes the first identifier, the second QoS parameter includes the second identifier, and the second device may determine the QoS flow of the non-uncrewed aerial vehicle service and/or the data packet of the non-uncrewed aerial vehicle service based on the first identifier, and determine the QoS flow of the uncrewed aerial vehicle service and/or the data packet of the uncrewed aerial vehicle service based on the second identifier.

The foregoing describes how the second device determines the QoS flow (and/or the data packet) of the non-uncrewed aerial vehicle service. The following first describes how the second device controls the QoS flow of the non-uncrewed aerial vehicle service of the UE based on the first maximum bit rate and/or the first priority.

In an example, the second device may control the QoS flow of the non-uncrewed aerial vehicle service of the UE based on the first maximum bit rate, or control the data packet of the non-uncrewed aerial vehicle service of the UE based on the first maximum bit rate, or control the QoS flow of the non-uncrewed aerial vehicle service of the UE and the data packet of the non-uncrewed aerial vehicle service.

For example, the first maximum bit rate is MFBR-non UAV, and the second device is UE and/or a RAN. The second device may obtain a first QoS flow, where the first QoS flow is a QoS flow of the non-uncrewed aerial vehicle service. The second device may determine a bit rate of the first QoS flow. If the bit rate of the first QoS flow is greater than the first maximum bit rate, the second device discards or delays sending data that exceeds the first maximum bit rate in the first QoS flow; or if the bit rate of the first QoS flow is less than or equal to the first maximum bit rate, the second device sends the first QoS flow. For example, if the second device is UE, the second device sends the first QoS flow to a RAN. For another example, if the second device is a RAN, the second device sends the first QoS flow to UE and/or a UPF.

For another example, the first maximum bit rate is one or more of session-AMBR-non UAV, UPF-AMBR-non UAV, or DN-AMBR-non UAV, and the second device is UE and/or a UPF. The second device receives a first QoS flow, where the first QoS flow is a QoS flow of the non-uncrewed aerial vehicle service; and determines a sum of bit rates of a received QoS flow of the non-uncrewed aerial vehicle service and the first QoS flow. If the sum of the bit rates of the received QoS flow of the non-uncrewed aerial vehicle service and the first QoS flow is greater than the first maximum bit rate, the second device discards or delays sending data that exceeds the first maximum bit rate in the first QoS flow; or if the sum of the bit rates of the received QoS flow of the non-uncrewed aerial vehicle service and the first QoS flow is less than or equal to the first maximum bit rate, the second device sends the first QoS flow. For example, if the second device is UE, the second device sends the first QoS flow to a UPF (through a RAN). For another example, if the second device is a UPF, the second device sends the first QoS flow to UE (through a RAN).

For another example, the first maximum bit rate is one or more of session-AMBR-non UAV, UPF-AMBR-non UAV, or DN-AMBR-non UAV, and the second device is UE and/or a UPF. The second device receives a QoS flow of a hybrid service, where the QoS flow of the hybrid service includes a data packet of the non-uncrewed aerial vehicle service; and determines a sum of bit rates of a received data packet of the non-uncrewed aerial vehicle service and the data packet of the non-uncrewed aerial vehicle service in the QoS flow of the hybrid service. If the sum of the bit rates of the received data packet of the non-uncrewed aerial vehicle service and the data packet of the non-uncrewed aerial vehicle service in the QoS flow of the hybrid service is greater than the first maximum bit rate, the second device discards or delays sending data that exceeds the first maximum bit rate in the data packet of the non-uncrewed aerial vehicle service in the QoS flow of the hybrid service. Alternatively, if the sum of the bit rates of the received data packet of the non-uncrewed aerial vehicle service and the data packet of the non-uncrewed aerial vehicle service in the QoS flow of the hybrid service is less than or equal to the first maximum bit rate, the second device sends the data packet of the non-uncrewed aerial vehicle service in the QoS flow of the hybrid service. For example, if the second device is UE, the second device sends the data packet of the non-uncrewed aerial vehicle service in the QoS flow of the hybrid service to a UPF (through a RAN). For another example, if the second device is a UPF, the second device sends the data packet of the non-uncrewed aerial vehicle service in the QoS flow of the hybrid service to UE (through a RAN).

For another example, the first maximum bit rate is UE-AMBR-non UAV and/or UE-slice-MBR-non UAV, and the second device is UE and/or a RAN. The second device receives a first QoS flow, where the first QoS flow is a QoS flow of the non-uncrewed aerial vehicle service; and determines a sum of bit rates of a received QoS flow of the non-uncrewed aerial vehicle service and the first QoS flow. If the sum of the bit rates of the received QoS flow of the non-uncrewed aerial vehicle service and the first QoS flow is greater than the first maximum bit rate, the second device discards or delays sending the first QoS flow; or if the sum of the bit rates of the received QoS flow of the non-uncrewed aerial vehicle service and the first QoS flow is less than or equal to the first maximum bit rate, the second device sends the first QoS flow. For example, if the second device is UE, the second device sends the first QoS flow to a RAN. For another example, if the second device is a RAN, the second device sends the first QoS flow to UE and/or a UPF.

For another example, the first maximum bit rate is UE-AMBR-non UAV and/or UE-slice-MBR-non UAV, and the second device is UE and/or a RAN. The second device receives a QoS flow of a hybrid service, where the QoS flow of the hybrid service includes a data packet of the non-uncrewed aerial vehicle service; and determines a sum of bit rates of a received data packet of the non-uncrewed aerial vehicle service and the data packet of the non-uncrewed aerial vehicle service in the QoS flow of the hybrid service. If the sum of the bit rates of the received data packet of the non-uncrewed aerial vehicle service and the data packet of the non-uncrewed aerial vehicle service in the QoS flow of the hybrid service is greater than the first maximum bit rate, the second device discards or delays sending data that exceeds the first maximum bit rate in the data packet of the non-uncrewed aerial vehicle service in the QoS flow of the hybrid service. Alternatively, if the sum of the bit rates of the received data packet of the non-uncrewed aerial vehicle service and the data packet of the non-uncrewed aerial vehicle service in the QoS flow of the hybrid service is less than or equal to the first maximum bit rate, the second device sends the data packet of the non-uncrewed aerial vehicle service in the QoS flow of the hybrid service. For example, if the second device is UE, the second device sends the data packet of the non-uncrewed aerial vehicle service in the QoS flow of the hybrid service to a RAN. For another example, if the second device is a RAN, the second device sends the data packet of the non-uncrewed aerial vehicle service in the QoS flow of the hybrid service to UE and/or a UPF.

In another example, the second device may control the QoS flow of the non-uncrewed aerial vehicle service of the UE based on the first priority, or control the data packet of the non-uncrewed aerial vehicle service of the UE based on the first priority, or control the QoS flow of the non-uncrewed aerial vehicle service of the UE and the data packet of the non-uncrewed aerial vehicle service based on the first priority.

For example, the second device may obtain a first QoS flow and a second QoS flow, where the first QoS flow is a QoS flow of the non-uncrewed aerial vehicle service, and the second QoS flow is a QoS flow of the uncrewed aerial vehicle service. The second device may send the second QoS flow based on the first priority. For example, the second device sends the second QoS flow based on the first priority, and sends the first QoS flow after sending the second QoS flow. For another example, the second device may send the second QoS flow based on the first priority, but does not send the first QoS flow. For example, the second device may not send the first QoS flow when resources are insufficient. For another example, the second device sends the second QoS flow based on the first priority by using a resource to be used to send the first QoS flow.

For another example, the second device may obtain a QoS flow of a hybrid service, where the QoS flow of the hybrid service includes a data packet of the non-uncrewed aerial vehicle service and a data packet of the uncrewed aerial vehicle service. The second device may send the data packet of the uncrewed aerial vehicle service based on the first priority. For example, the second device sends the data packet of the uncrewed aerial vehicle service based on the first priority, and sends the data packet of the non-uncrewed aerial vehicle service after sending the data packet of the uncrewed aerial vehicle service. For another example, the second device may send the data packet of the uncrewed aerial vehicle service based on the first priority, but does not send the data packet of the non-uncrewed aerial vehicle service. For example, the second device may not send the data packet of the non-uncrewed aerial vehicle service when resources are insufficient. For another example, the second device sends the data packet of the uncrewed aerial vehicle service based on the first priority by using a resource to be used to send the data packet of the non-uncrewed aerial vehicle service.

It should be noted that, that the second device does not send the first QoS flow may be understood as that the second device terminates sending the first QoS flow, or that the second device deletes the first QoS flow. That the second device does not send the data packet of the non-uncrewed aerial vehicle service may be understood as that the second device terminates sending the data packet of the non-uncrewed aerial vehicle service, or that the second device deletes the data packet of the non-uncrewed aerial vehicle service.

It should be noted that, for a specific implementation in which the second device controls the QoS flow of the non-uncrewed aerial vehicle service (and/or the data packet of the non-uncrewed aerial vehicle service) of the UE based on the first maximum bit rate and the first priority, refer to the foregoing related descriptions in which the second device controls the QoS flow of the non-uncrewed aerial vehicle service (and/or the data packet of the non-uncrewed aerial vehicle service) of the UE based on the first maximum bit rate or the first priority. Details are not described herein.

The foregoing describes how the second device controls the QoS flow of the non-uncrewed aerial vehicle service (and/or the data packet of the non-uncrewed aerial vehicle service) of the UE based on the first QoS parameter. In another possible implementation, the second device may control the QoS flow of the uncrewed aerial vehicle service (and/or the data packet of the uncrewed aerial vehicle service) of the UE based on the second QoS parameter; or the second device may control the QoS flow of the non-uncrewed aerial vehicle service (and/or the data packet of the non-uncrewed aerial vehicle service) of the UE based on the first QoS parameter, and control the QoS flow of the uncrewed aerial vehicle service (and/or the data packet of the uncrewed aerial vehicle service) of the UE based on the second QoS parameter.

For a specific implementation process in which the second device adds the second identifier to the QoS flow of the uncrewed aerial vehicle service (and/or the data packet of the uncrewed aerial vehicle service) and obtains the QoS flow of the uncrewed aerial vehicle service (and/or the data packet of the uncrewed aerial vehicle service) from the at least one QoS flow, refer to the foregoing descriptions. Details are not described herein again. The following describes how the second device controls the uncrewed aerial vehicle service of the UE based on the second maximum bit rate and/or the second priority.

In an example, the second device may control the QoS flow of the uncrewed aerial vehicle service of the UE based on the second maximum bit rate, or control the data packet of the uncrewed aerial vehicle service of the UE based on the second maximum bit rate, or control the QoS flow of the uncrewed aerial vehicle service of the UE and the data packet of the uncrewed aerial vehicle service.

For example, the second maximum bit rate is MFBR-UAV, and the second device is UE and/or a RAN. The second device may obtain a second QoS flow, where the second QoS flow is a QoS flow of the uncrewed aerial vehicle service. The second device may determine a bit rate of the second QoS flow. If the bit rate of the second QoS flow is greater than the second maximum bit rate, the second device discards or delays sending data that exceeds the second maximum bit rate in the second QoS flow; or if the bit rate of the second QoS flow is less than or equal to the second maximum bit rate, the second device sends the second QoS flow. For example, if the second device is UE, the second device sends the second QoS flow to a RAN. For another example, if the second device is a RAN, the second device sends the second QoS flow to UE and/or a UPF.

For another example, the second maximum bit rate is one or more of session-AMBR-UAV, UPF-AMBR-UAV, or DN-AMBR-UAV, and the second device is UE and/or a UPF. The second device receives a second QoS flow, where the second QoS flow is a QoS flow of the uncrewed aerial vehicle service; and determines a sum of bit rates of a received QoS flow of the uncrewed aerial vehicle service and the second QoS flow. If the sum of the bit rates of the received QoS flow of the uncrewed aerial vehicle service and the second QoS flow is greater than the second maximum bit rate, the second device discards or delays sending data that exceeds the second maximum bit rate in the second QoS flow; or if the sum of the bit rates of the received QoS flow of the uncrewed aerial vehicle service and the second QoS flow is less than or equal to the second maximum bit rate, the second device sends the second QoS flow. For example, if the second device is UE, the second device sends the second QoS flow to a UPF (through a RAN). For another example, if the second device is a UPF, the second device sends the second QoS flow to UE (through a RAN).

For another example, the second maximum bit rate is one or more of session-AMBR-UAV, UPF-AMBR-UAV, or DN-AMBR-UAV, and the second device is UE and/or a UPF. The second device receives a QoS flow of a hybrid service, where the QoS flow of the hybrid service includes a data packet of the uncrewed aerial vehicle service; and determines a sum of bit rates of a received QoS flow of the uncrewed aerial vehicle service and the data packet of the uncrewed aerial vehicle service in the QoS flow of the hybrid service. If the sum of the bit rates of the received QoS flow of the uncrewed aerial vehicle service and the data packet of the uncrewed aerial vehicle service in the QoS flow of the hybrid service is greater than the second maximum bit rate, the second device discards or delays sending data that exceeds the second maximum bit rate in the data packet of the uncrewed aerial vehicle service in the QoS flow of the hybrid service. Alternatively, if the sum of the bit rates of the received QoS flow of the uncrewed aerial vehicle service and the data packet of the uncrewed aerial vehicle service in the QoS flow of the hybrid service is less than or equal to the second maximum bit rate, the second device sends the data packet of the uncrewed aerial vehicle service in the QoS flow of the hybrid service. For example, if the second device is UE, the second device sends the data packet of the uncrewed aerial vehicle service in the QoS flow of the hybrid service to a UPF (through a RAN). For another example, if the second device is a UPF, the second device sends the data packet of the uncrewed aerial vehicle service in the QoS flow of the hybrid service to UE (through a RAN).

For another example, the second maximum bit rate is UE-AMBR-UAV and/or UE-slice-MBR-UAV, and the second device is UE and/or a RAN. The second device receives a second QoS flow, where the second QoS flow is a QoS flow of the uncrewed aerial vehicle service; and determines a sum of bit rates of a received QoS flow of the uncrewed aerial vehicle service and the second QoS flow. If the sum of the bit rates of the received QoS flow of the uncrewed aerial vehicle service and the second QoS flow is greater than the second maximum bit rate, the second device discards or delays sending the second QoS flow; or if the sum of the bit rates of the received QoS flow of the uncrewed aerial vehicle service and the second QoS flow is less than or equal to the second maximum bit rate, the second device sends the second QoS flow. For example, if the second device is UE, the second device sends the second QoS flow to a RAN. For another example, if the second device is a RAN, the second device sends the second QoS flow to UE and/or a UPF.

For another example, the second maximum bit rate is UE-AMBR-UAV and/or UE-slice-MBR-UAV, and the second device is UE and/or a RAN. The second device receives a QoS flow of a hybrid service, where the QoS flow of the hybrid service includes a data packet of the uncrewed aerial vehicle service; and determines a sum of bit rates of a received data packet of the uncrewed aerial vehicle service and the data packet of the uncrewed aerial vehicle service in the QoS flow of the hybrid service. If the sum of the bit rates of the received data packet of the uncrewed aerial vehicle service and the data packet of the uncrewed aerial vehicle service in the QoS flow of the hybrid service is greater than the second maximum bit rate, the second device discards or delays sending data that exceeds the second maximum bit rate in the data packet of the uncrewed aerial vehicle service in the QoS flow of the hybrid service. Alternatively, if the sum of the bit rates of the received data packet of the uncrewed aerial vehicle service and the data packet of the uncrewed aerial vehicle service in the QoS flow of the hybrid service is less than or equal to the second maximum bit rate, the second device sends the data packet of the uncrewed aerial vehicle service in the QoS flow of the hybrid service. For example, if the second device is UE, the second device sends the data packet of the uncrewed aerial vehicle service in the QoS flow of the hybrid service to a RAN. For another example, if the second device is a RAN, the second device sends the data packet of the uncrewed aerial vehicle service in the QoS flow of the hybrid service to UE and/or a UPF.

In another example, the second device may control the QoS flow of the uncrewed aerial vehicle service of the UE based on the second priority, or control the data packet of the uncrewed aerial vehicle service of the UE based on the second priority, or control the QoS flow of the uncrewed aerial vehicle service of the UE and the data packet of the uncrewed aerial vehicle service based on the second priority.

For example, the second device may obtain a first QoS flow and a second QoS flow, where the first QoS flow is a QoS flow of the non-uncrewed aerial vehicle service, and the second QoS flow is a QoS flow of the uncrewed aerial vehicle service. The second device may send the second QoS flow based on the second priority. For example, the second device sends the second QoS flow based on the second priority, and sends the first QoS flow after sending the second QoS flow. For another example, the second device may send the second QoS flow based on the second priority, but does not send the first QoS flow. For example, the second device may not send the first QoS flow when resources are insufficient. For another example, the second device sends the second QoS flow based on the second priority by using a resource to be used to send the first QoS flow.

For another example, the second device may obtain a QoS flow of a hybrid service, where the QoS flow of the hybrid service includes a data packet of the non-uncrewed aerial vehicle service and a data packet of the uncrewed aerial vehicle service. The second device may send the data packet of the uncrewed aerial vehicle service based on the second priority. For example, the second device sends the data packet of the uncrewed aerial vehicle service based on the second priority, and sends the data packet of the non-uncrewed aerial vehicle service after sending the data packet of the uncrewed aerial vehicle service. For another example, the second device may send the data packet of the uncrewed aerial vehicle service based on the second priority, but does not send the data packet of the non-uncrewed aerial vehicle service. For example, the second device may not send the data packet of the non-uncrewed aerial vehicle service when resources are insufficient. For another example, the second device sends the data packet of the uncrewed aerial vehicle service based on the second priority by using a resource to be used to send the data packet of the non-uncrewed aerial vehicle service.

It should be noted that, for a specific implementation in which the second device controls the QoS flow of the uncrewed aerial vehicle service (and/or the data packet of the uncrewed aerial vehicle service) of the UE based on the second maximum bit rate and the second priority, refer to the foregoing related descriptions in which the second device controls the QoS flow of the uncrewed aerial vehicle service (and/or the data packet of the uncrewed aerial vehicle service) of the UE based on the second maximum bit rate or the second priority. Details are not described herein.

In the foregoing embodiment of this application, the first device determines, by using a service type as a granularity, the first quality of service parameter corresponding to the non-uncrewed aerial vehicle service of the terminal device, and sends the first quality of service parameter to the second device. After receiving the first quality of service parameter, the second device may control the data flow of the non-uncrewed aerial vehicle service of the terminal device based on the first quality of service parameter, to control the data flow of the non-uncrewed aerial vehicle service of the terminal device by using a service type as a granularity, so that the second device can accurately control data flows of different service types, thereby reducing attacks carried out by an attacker on an uncrewed aerial vehicle by using the non-uncrewed aerial vehicle service, preventing the non-uncrewed aerial vehicle service from occupying a resource of the uncrewed aerial vehicle service, and improving safety of the uncrewed aerial vehicle.

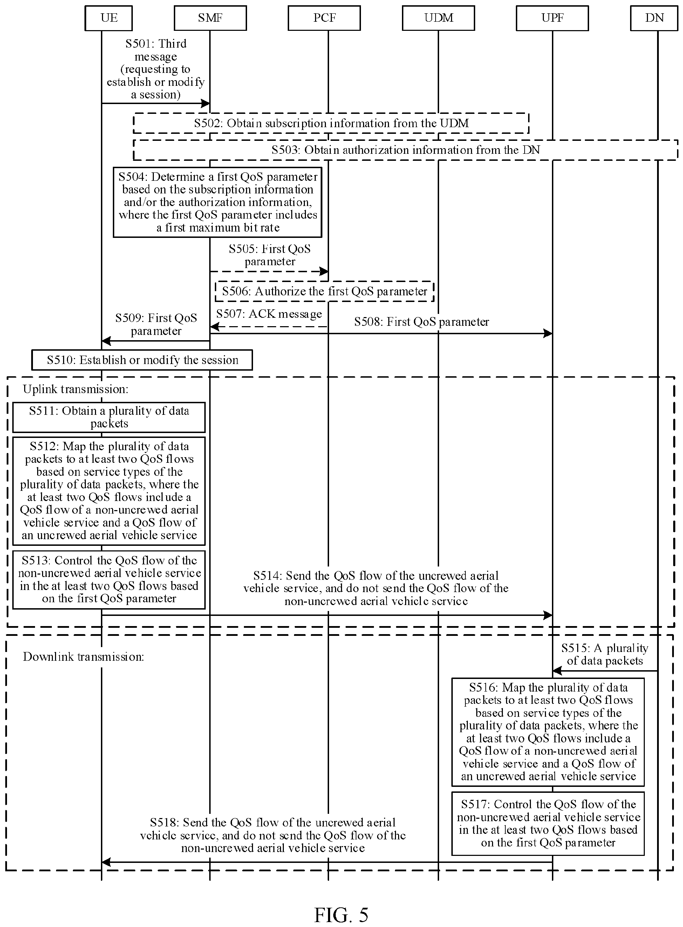

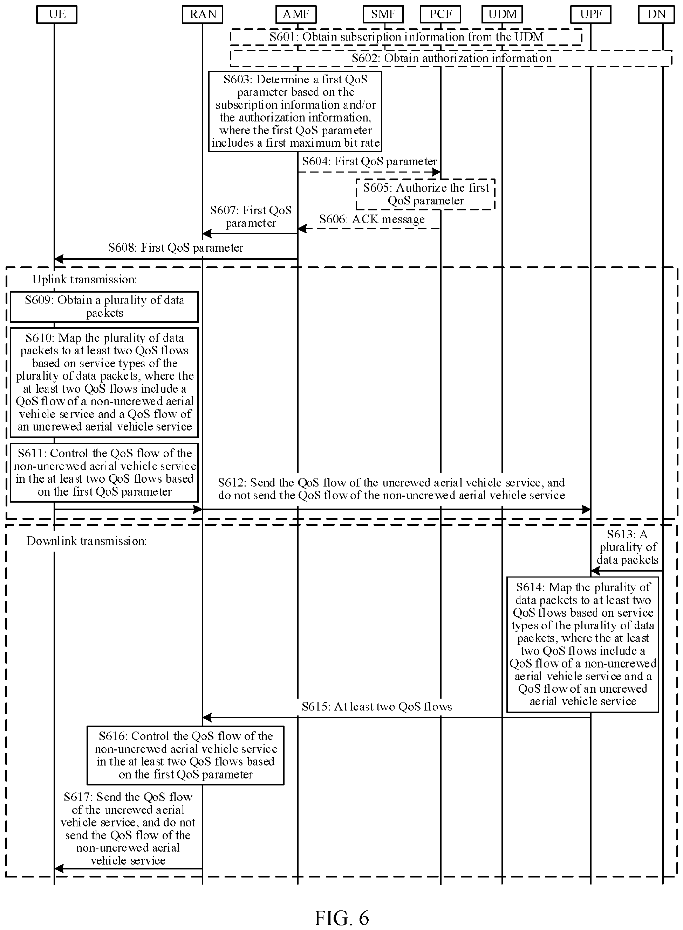

The following describes the procedure shown in FIG. 4 with reference to FIG. 5 and FIG. 6 by using an example in which the second device controls the non-uncrewed aerial vehicle service of the UE.

FIG. 5 is another schematic flowchart of a communication method according to an embodiment of this application. In this embodiment, a first device is an SMF or a PCF, a second device is UE and/or a UPF, and a first QoS parameter includes one or more of a first maximum bit rate, a first identifier, or a first priority. In FIG. 5, an example in which the first QoS parameter includes at least the first maximum bit rate is used. The first maximum bit rate includes one or more of session-AMBR-non UAV, UPF-AMBR-non UAV, or DN-AMBR-non UAV. As shown in FIG. 5, the method includes the following content.

S501: UE sends a third message to an SMF, and correspondingly, the SMF receives the third message from the UE.

The third message is used to request to establish or modify a session. The session may be, for example, a PDU session. However, embodiments of this application are not limited thereto. In an optional implementation, the session may be a session corresponding to an uncrewed aerial vehicle service, or a 1^{st} session corresponding to an uncrewed aerial vehicle service of the UE. In another optional implementation, the session may be a session corresponding to a non-uncrewed aerial vehicle service, or a 1^{st} session corresponding to a non-uncrewed aerial vehicle service of the UE. However, embodiments of this application are not limited thereto.

S502: The SMF obtains subscription information from a UDM.

S502 is an optional step. For example, the SMF may read the subscription information that is locally stored, or may obtain the subscription information from the UDM. The subscription information may include one or more of a first bit rate, a second bit rate, or a fifth bit rate. For descriptions of the subscription information and a specific implementation process of S502, refer to related content of S401. Details are not described herein again.

S503: The SMF obtains authorization information from a DN.

S503 is an optional step. For example, the SMF may read the authorization information that is locally stored, or may obtain the authorization information from the DN or a PCF. Alternatively, the SMF may first send the authorization information obtained from the DN to a PCF, the PCF determines authorization information of the PCF based on the authorization information of the DN, and then the PCF sends the authorization information to the SMF. In other words, the SMF obtains the authorization information from the DN and the PCF. In FIG. 5, an example in which the SMF obtains the authorization information from the DN is used. An obtaining method is not limited in this application. The authorization information may include one or more of a third bit rate, a fourth bit rate, or a sixth bit rate. For descriptions of the authorization information and a specific implementation process of S503, refer to related content of S401. Details are not described herein again.

S504: The SMF determines a first QoS parameter.

In this embodiment, the SMF may determine, in response to the third message, the first QoS parameter corresponding to a non-uncrewed aerial vehicle service of the UE. For example, the SMF may determine the first QoS parameter based on the subscription information and/or the authorization information; or the SMF may send, to the PCF, a request message used to obtain the first QoS parameter, and the PCF determines the first QoS parameter and sends the first QoS parameter to the SMF. In other words, the SMF receives the first QoS parameter from the PCF. For example, the request message may further include the subscription information obtained by the SMF (as described in S502) and/or the authorization information of the DN obtained by the SMF (as described in S503), so that the PCF may determine the first QoS parameter based on the subscription information (for example, including one or more of the first bit rate, the second bit rate, or the fifth bit rate) and/or the authorization information of the DN (for example, including one or more of the third bit rate, the fourth bit rate, or the sixth bit rate). For a specific implementation process of determining the first QoS parameter by the PCF, refer to related content of determining the first QoS parameter by the SMF or the PCF in S401. Details are not described herein again.

In addition, it should be noted that, if the SMF obtains the first QoS parameter from the PCF, the request message that is sent by the SMF to the PCF in S504 and that is used to obtain the first QoS parameter may be combined with the step that the SMF sends the authorization information of the DN to the PCF in S503. In other words, the authorization information of the DN sent to the PCF in S503 also includes information used to obtain the first QoS parameter. In this way, a quantity of times of message exchange with the PCF can be reduced, and efficiency can be improved.

In FIG. 5, an example in which the SMF determines the first QoS parameter based on the subscription information and/or the authorization information is used. For a specific implementation process in which the SMF determines the first QoS parameter, refer to related content in S401. Details are not described herein again. A method for determining the first QoS parameter by the SMF is not limited in this application.

S505: The SMF sends the first QoS parameter to the PCF, and correspondingly, the PCF receives the first QoS parameter from the SMF.

S505 is an optional step. For example, after the SMF determines the first QoS parameter based on the subscription information and/or the authorization information, the SMF may send the first QoS parameter to the PCF, so that the PCF authorizes the first QoS parameter. Optionally, the SMF may further send the authorization information of the DN to the PCF, so that the PCF authorizes the first QoS parameter and/or authorizes the authorization information of the DN. Optionally, the SMF may further send the subscription information (for example, obtained in S502) to the PCF, so that the PCF authorizes the first QoS parameter.

S506: The PCF authorizes the first QoS parameter.

S506 is an optional step. After receiving the first QoS parameter, the PCF may authorize the first QoS parameter, for example, may authorize the first QoS parameter based on authorization information authorized by the PCF and/or the authorization information of the DN, and send a response message to the SMF. If the first QoS parameter is authorized by the PCF, the response message may be, for example, an ACK message, and may indicate that authorization succeeds; or if the first QoS parameter is not authorized by the PCF, the response message may be, for example, a NACK message, and may indicate that authorization fails. Optionally, the PCF may determine a QoS parameter corresponding to the non-uncrewed aerial vehicle service of the UE, and send the determined QoS parameter as the authorized first QoS parameter to the SMF. In FIG. 5, an example in which the PCF authorizes the first QoS parameter is used.

S507: The PCF sends an ACK message to the SMF, and correspondingly, the SMF receives the ACK message from the PCF.

S507 is an optional step. The ACK message may indicate that authorization succeeds.

S508: The SMF sends the first QoS parameter to a UPF, and correspondingly, the UPF receives the first QoS parameter from the SMF.

S509: The SMF sends the first QoS parameter to the UE, and correspondingly, the UE receives the first QoS parameter from the SMF.

In this embodiment, after determining the first QoS parameter, the SMF may send the first QoS parameter to the UE, or send the first QoS parameter to the UPF, or send the first QoS parameter to the UE and the UPF. In FIG. 5, an example in which the SMF sends the first QoS parameter to the UE and the UPF is used.

After receiving the first QoS parameter, the UE may control, based on the first QoS parameter, a QoS flow of the non-uncrewed aerial vehicle service in uplink transmission, that is, perform content of S511 to S514. After receiving the first QoS parameter, the UPF may control, based on the first QoS parameter, a QoS flow of the non-uncrewed aerial vehicle service in downlink transmission, that is, perform content of S515 to S518.

S510: Establish or modify a session between the UE and the SMF.

S511: The UE obtains a plurality of data packets.

The plurality of data packets include a data packet of the non-uncrewed aerial vehicle service, or include a data packet of the non-uncrewed aerial vehicle service and a data packet of an uncrewed aerial vehicle service. In this embodiment, an example in which the plurality of data packets include the data packet of the non-uncrewed aerial vehicle service and the data packet of the uncrewed aerial vehicle service is used. For example, the UE may receive the plurality of data packets from an application layer.

S512: The UE maps the plurality of data packets to at least two QoS flows based on service types of the plurality of data packets.

In this embodiment, the at least two QoS flows include a QoS flow of the non-uncrewed aerial vehicle service and a QoS flow of the uncrewed aerial vehicle service. Optionally, the at least two QoS flows may further include a QoS flow of a hybrid service. Optionally, the UE may add a first identifier to the QoS flow of the non-uncrewed aerial vehicle service in the at least two QoS flows. Optionally, the UE may further add the first identifier to a data packet of the non-uncrewed aerial vehicle service in the QoS flow of the hybrid service. For a specific implementation process of S512, refer to related content of S403. Details are not described herein again.

S513: The UE controls the QoS flow of the non-uncrewed aerial vehicle service in the at least two QoS flows based on the first QoS parameter.

For example, the UE may control the QoS flow of the non-uncrewed aerial vehicle service based on a first priority and/or a first maximum bit rate. For a specific implementation process, refer to related content in S403. Details are not described herein again. In this embodiment, an example in which a control result of the UE is that the UE sends the QoS flow of the uncrewed aerial vehicle service to the UPF and does not send the QoS flow of the non-uncrewed aerial vehicle service is used.

S514: The UE sends the QoS flow of the uncrewed aerial vehicle service to the UPF, and does not send the QoS flow of the non-uncrewed aerial vehicle service. Correspondingly, the UPF receives the QoS flow of the non-uncrewed aerial vehicle service from the UE.

S515: The DN sends a plurality of data packets to the UPF, and correspondingly, the UPF receives the plurality of data packets from the DN.

For a specific implementation of S515, refer to S511. Details are not described herein again.

S516: The UPF maps the plurality of data packets to at least two QoS flows based on service types of the plurality of data packets.

In this embodiment, the at least two QoS flows include a QoS flow of the non-uncrewed aerial vehicle service and a QoS flow of the uncrewed aerial vehicle service. Optionally, the at least two QoS flows may further include a QoS flow of a hybrid service. Optionally, the UPF may add a first identifier to the QoS flow of the non-uncrewed aerial vehicle service in the at least two QoS flows. Optionally, the UPF may further add the first identifier to a data packet of the non-uncrewed aerial vehicle service in the QoS flow of the hybrid service. For a specific implementation process of S516, refer to related content of S403. Details are not described herein again.

S517: The UPF controls the QoS flow of the non-uncrewed aerial vehicle service in the at least two QoS flows based on the first QoS parameter.

For example, the UPF may control the QoS flow of the non-uncrewed aerial vehicle service based on a first priority and/or a first maximum bit rate. For a specific implementation process, refer to related content in S403. Details are not described herein again. In this embodiment, an example in which a control result of the UPF is that the UPF sends the QoS flow of the uncrewed aerial vehicle service to the UE and does not send the QoS flow of the non-uncrewed aerial vehicle service is used.

S518: The UPF sends the QoS flow of the uncrewed aerial vehicle service to the UE, and does not send the QoS flow of the non-uncrewed aerial vehicle service. Correspondingly, the UE receives the QoS flow of the uncrewed aerial vehicle service from the UPF.

It should be noted that an execution sequence of the steps in FIG. 5 is merely an example. This is not limited in embodiments of this application. For example, the SMF may first obtain the subscription information, and then obtain the authorization information; or the SMF may first obtain the authorization information, and then obtain the subscription information; or the SMF may obtain the subscription information and the authorization information at the same time. For another example, the SMF may first send the first QoS parameter to the UPF, and then send the first QoS parameter to the UE; or the SMF may first send the first QoS parameter to the UE, and then send the first QoS parameter to the UPF; or the SMF may send the first QoS parameter to the UE and the UPF at the same time. For another example, S510 may be performed before S508 or S509, or may be performed before S504, or may be performed before any step between S504 and S508. This is not limited in this application. For example, in an optional implementation, the third message in S501 may be a request to establish a session corresponding to the uncrewed aerial vehicle service, and the first QoS parameter determined in S504 to S509 is for the non-uncrewed aerial vehicle service, and may not affect establishment and modification of the uncrewed aerial vehicle session. In other words, S510 may be performed before S504 to S509.

It should be noted that, in the steps in FIG. 5, the first QoS parameter is obtained for the non-uncrewed aerial vehicle service, the first QoS parameter is sent to the UE or the UPF, and the UE or the UPF controls the QoS flow or the data packet corresponding to the non-uncrewed aerial vehicle service. The steps in FIG. 5 may also be used in a case that a second QoS parameter is obtained for the uncrewed aerial vehicle service, the second QoS parameter is sent to the UE or the UPF, and the UE or the UPF controls the QoS flow or the data packet corresponding to the uncrewed aerial vehicle service. The foregoing steps for the non-uncrewed aerial vehicle service and the uncrewed aerial vehicle service may be performed sequentially, or may be performed simultaneously (for example, a same message includes the first QoS parameter and the second QoS parameter). This is not limited in this application.

FIG. 6 is another schematic flowchart of a communication method according to an embodiment of this application. In this embodiment, a first device is an AMF or a PCF, a second device is UE and/or a RAN, and a first QoS parameter includes one or more of a first maximum bit rate, a first identifier, or a first priority. In FIG. 6, an example in which the first QoS parameter includes at least the first maximum bit rate is used. The first maximum bit rate includes one or more of MFBR-non UAV, UE-AMBR-non UAV, or UE-slice-MBR-non UAV. As shown in FIG. 6, the method includes the following content.

S605, S609 to S612, S613, and S614 are respectively corresponding to and the same as S506, S511 to S514, S515, and S516 in FIG. 5. A difference is as follows:
S601: An AMF obtains subscription information from a UDM.

S601 is an optional step. For example, the AMF may read the subscription information that is locally stored, or may obtain the subscription information from the UDM. The subscription information may include one or more of a first bit rate, a second bit rate, or a fifth bit rate. For descriptions of the subscription information and a specific implementation process of S601, refer to related content of S401. Details are not described herein again.

S602: The AMF obtains authorization information.

S602 is an optional step. For example, the AMF may read the authorization information that is locally stored, or may obtain the subscription information from a DN or another network function such as an SMF or a PCF. In FIG. 6, an example in which the AMF obtains the authorization information from the SMF or the PCF is used. The authorization information may include one or more of a third bit rate, a fourth bit rate, or a sixth bit rate. For descriptions of the authorization information and a specific implementation process of S602, refer to related content of S401. Details are not described herein again.

S603: The AMF determines a first QoS parameter.

In this embodiment, the AMF may determine, in a procedure such as a registration procedure of UE, a service request procedure, or a procedure in which the UDM updates subscription information of UE, the first QoS parameter corresponding to a non-uncrewed aerial vehicle service of the UE. For example, the AMF may determine the first QoS parameter based on the subscription information and/or the authorization information; or the AMF may send, to the PCF, a request message used to obtain the first QoS parameter, and receive the first QoS parameter from the PCF. In FIG. 6, an example in which the AMF determines the first QoS parameter based on the subscription information and/or the authorization information is used. For a specific implementation process in which the AMF determines the first QoS parameter, refer to related content in S401 or related content in S504 in which the SMF determines the first QoS parameter. Details are not described herein again.

S604: The AMF sends the first QoS parameter to the PCF, and correspondingly, the PCF receives the first QoS parameter from the AMF.

S604 is an optional step. For example, after the AMF determines the first QoS parameter based on the subscription information and/or the authorization information, the AMF may send the first QoS parameter to the PCF, so that the PCF authorizes the first QoS parameter.

S606: The PCF sends an ACK message to the AMF, and correspondingly, the AMF receives the ACK message from the PCF.

S606 is an optional step. The ACK message may indicate that authorization succeeds.

S607: The AMF sends the first QoS parameter to a RAN, and correspondingly, the RAN receives the first QoS parameter from the AMF.

S608: The AMF sends the first QoS parameter to the UE, and correspondingly, the UE receives the first QoS parameter from the AMF.

In this embodiment, the first QoS parameter includes a first maximum bit rate, a first priority, and a first identifier, and the first maximum bit rate includes one or more of MFBR-non UAV, UE-AMBR-non UAV, or UE-slice-MBR-non UAV. The AMF may send the first QoS parameter to the RAN; or the AMF may send the first QoS parameter to the UE; or the AMF may send the first QoS parameter to the UE and the RAN. In FIG. 6, an example in which the AMF sends the first QoS parameter to the UE and the RAN is used.

After receiving the first QoS parameter, the UE may control, based on the first QoS parameter, a QoS flow of the non-uncrewed aerial vehicle service in uplink transmission, that is, perform content of S609 to S612. After receiving the first QoS parameter, the RAN may control, based on the first QoS parameter, a QoS flow of the non-uncrewed aerial vehicle service in downlink transmission and/or uplink transmission. For ease of understanding, in this embodiment of this application, an example in which the RAN controls, based on the first QoS parameter, a QoS flow of the non-uncrewed aerial vehicle service in downlink transmission is used, that is, content of S613 to S617 is performed.

S615: The UPF sends at least two QoS flows to the RAN, and correspondingly, the RAN receives the at least two QoS flows from the UPF.

The at least two QoS flows include a QoS flow of an uncrewed aerial vehicle service and a QoS flow of the non-uncrewed aerial vehicle service, and the QoS flow of the non-uncrewed aerial vehicle service includes the first identifier. Optionally, the QoS flow of the uncrewed aerial vehicle service includes a second identifier. Optionally, the at least two QoS flows may further include a QoS flow of a hybrid service, and a data packet of the non-uncrewed aerial vehicle service in the QoS flow of the hybrid service includes the first identifier. Optionally, a data packet of the uncrewed aerial vehicle service in the QoS flow of the hybrid service includes the second identifier.

S616: The RAN controls the QoS flow of the non-uncrewed aerial vehicle service in the at least two QoS flows based on the first QoS parameter.

For example, the RAN may determine the QoS flow of the non-uncrewed aerial vehicle service from the at least two QoS flows, and control the QoS flow of the non-uncrewed aerial vehicle service based on the first QoS parameter. For a specific implementation process, refer to related content in S403. Details are not described herein again. In this embodiment, an example in which a control result of the RAN is that the RAN sends the QoS flow of the uncrewed aerial vehicle service to the UE and does not send the QoS flow of the non-uncrewed aerial vehicle service is used.

S617: The RAN sends the QoS flow of the uncrewed aerial vehicle service to the UE, and does not send the QoS flow of the non-uncrewed aerial vehicle service. Correspondingly, the UE receives the QoS flow of the uncrewed aerial vehicle service from the RAN.

It should be noted that an execution sequence of the steps in FIG. 6 is merely an example. This is not limited in embodiments of this application. For example, the AMF may first obtain the subscription information, and then obtain the authorization information; or the AMF may first obtain the authorization information, and then obtain the subscription information; or the AMF may obtain the subscription information and the authorization information at the same time. For another example, the AMF may first send the first QoS parameter to the RAN, and then send the first QoS parameter to the UE; or the AMF may first send the first QoS parameter to the UE, and then send the first QoS parameter to the RAN; or the AMF may send the first QoS parameter to the UE and the RAN at the same time.

It should be noted that, in the steps in FIG. 6, the first QoS parameter is obtained for the non-uncrewed aerial vehicle service, the first QoS parameter is sent to the UE/UPF or the RAN, and the UE or the UPF controls the QoS flow or the data packet corresponding to the non-uncrewed aerial vehicle service. The steps in FIG. 6 may also be used in a case that a second QoS parameter is obtained for the uncrewed aerial vehicle service, the second QoS parameter is sent to the UE/UPF or the RAN, and the UE/UPF or the RAN controls the QoS flow or the data packet corresponding to the uncrewed aerial vehicle service. The foregoing steps for the non-uncrewed aerial vehicle service and the uncrewed aerial vehicle service may be performed sequentially, or may be performed simultaneously (for example, a same message includes the first QoS parameter and the second QoS parameter). This is not limited in this application.

In the foregoing embodiments provided in this application, the methods provided in embodiments of this application are separately described from a perspective of interaction between the first device and the second device. To implement functions in the foregoing methods provided in embodiments of this application, the first device or the second device may include a hardware structure and/or a software module, and implement the foregoing functions in a form of the hardware structure, the software module, or a combination of the hardware structure and the software module.

The following describes communication apparatuses for implementing the foregoing methods in embodiments of this application with reference to the accompanying drawings. Therefore, all the foregoing content may be used in the following embodiments. Repeated content is not described again.

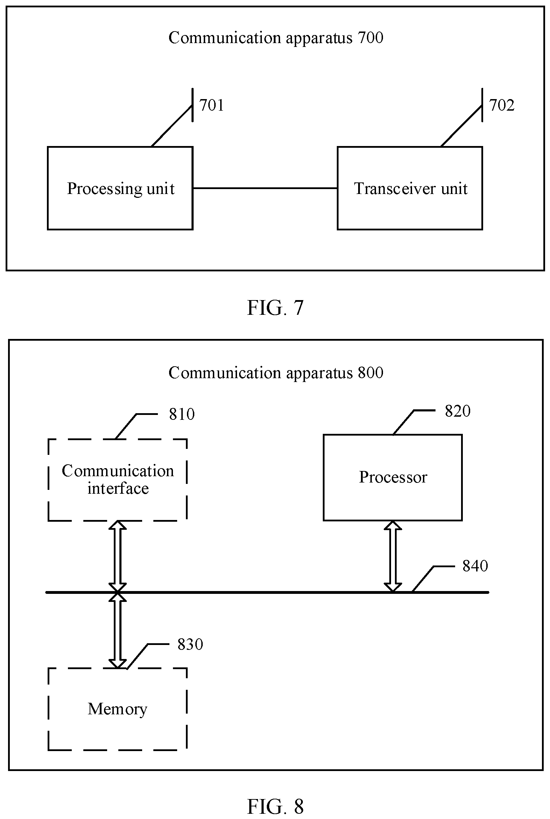

FIG. 7 is a diagram of a structure of a communication apparatus 700. The communication apparatus 700 may correspondingly implement functions or steps implemented by the first device or the second device in the foregoing method embodiments. The communication apparatus may include a processing unit 701 and a transceiver unit 702. Optionally, the communication apparatus 700 may further include a storage unit (not shown in FIG. 7). The storage unit may be configured to store instructions (code or a program) and/or data. The processing unit 701 and the transceiver unit 702 may be coupled to the storage unit. For example, the processing unit 701 may read the instructions (the code or the program) and/or the data in the storage unit, to implement a corresponding method. The foregoing units may be independently disposed, or may be partially or completely integrated. For example, the transceiver unit 702 may include a sending unit and a receiving unit.

In an example, the communication apparatus 700 may implement functions or steps implemented by the first device in the foregoing method embodiments.

The processing unit 701 is configured to determine a first quality of service parameter corresponding to a non-uncrewed aerial vehicle service of a terminal device, where the first quality of service parameter includes one or more of the following parameters:
a first maximum bit rate, where the first maximum bit rate is a maximum bit rate corresponding to the non-uncrewed aerial vehicle service;
a first priority, where the first priority indicates that a priority of a data flow of the non-uncrewed aerial vehicle service is lower than a priority of a data flow of an uncrewed aerial vehicle service; or
a first identifier, where the first identifier indicates a data flow of the non-uncrewed aerial vehicle service.

The transceiver unit 702 is configured to send the first quality of service parameter to a second device.

In a possible implementation, the processing unit 701 is further configured to determine a second quality of service parameter corresponding to the uncrewed aerial vehicle service of the terminal device; and the transceiver unit 702 is further configured to send the second quality of service parameter to the second device, where the second quality of service parameter includes one or more of the following parameters:
a second maximum bit rate, where the second maximum bit rate is a maximum bit rate corresponding to the uncrewed aerial vehicle service;
a second priority, where the second priority indicates the priority of the data flow of the uncrewed aerial vehicle service; or
a second identifier, where the second identifier indicates the data flow of the uncrewed aerial vehicle service.

In a possible implementation, the processing unit 701 is further configured to obtain a first bit rate and a second bit rate based on subscription information, where the first bit rate is a maximum bit rate that corresponds to the non-uncrewed aerial vehicle service and to which the terminal device subscribes, and the second bit rate is a maximum bit rate that corresponds to the uncrewed aerial vehicle service and to which the terminal device subscribes.

In a possible implementation, the processing unit 701 is further configured to obtain the subscription information that is stored; or the first device receives the subscription information from a unified data management function device.

In a possible implementation, the subscription information includes first indication information and second indication information, the first indication information indicates that the first bit rate is applicable to the non-uncrewed aerial vehicle service, and the second indication information indicates that the second bit rate is applicable to the uncrewed aerial vehicle service.

In a possible implementation, the processing unit 701 is further configured to obtain a third bit rate and a fourth bit rate based on authorization information, where the third bit rate is a maximum bit rate that corresponds to the non-uncrewed aerial vehicle service and that is authorized to the terminal device, and the fourth bit rate is a maximum bit rate that corresponds to the uncrewed aerial vehicle service and that is authorized to the terminal device.

In a possible implementation, the processing unit 701 is further configured to obtain the authorization information that is stored; or the first device receives the authorization information from a data network or a policy control function device.

In a possible implementation, the authorization information includes third indication information and fourth indication information, the third indication information indicates that the third bit rate is applicable to the non-uncrewed aerial vehicle service, and the fourth indication information indicates that the fourth bit rate is applicable to the uncrewed aerial vehicle service.

In a possible implementation, when the first quality of service parameter corresponding to the non-uncrewed aerial vehicle service of the terminal device is determined, the transceiver unit 702 is configured to: send a first message to the policy control function device, where the first message is used to request a quality of service parameter corresponding to the non-uncrewed aerial vehicle service of the terminal device; and receive a second message from the policy control function device, where the second message includes the first quality of service parameter.

In a possible implementation, the transceiver unit 702 is further configured to send fifth indication information to the second device, where the fifth indication information indicates that the first quality of service parameter is applicable to the non-uncrewed aerial vehicle service.

In a possible implementation, the maximum bit rate may include one or more of the following:
a maximum bit rate that can be reached by one data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

In a possible implementation, when the maximum bit rate includes one or more of the maximum value that can be reached by the sum of the bit rates of the data flows in one session of the terminal device, the maximum value that can be reached by the sum of the bit rates of the data flows in the session for the connection of the terminal device through one user plane function device, or the maximum value that can be reached by the sum of the bit rates of the data flows in the session for the connection between the terminal device and one data network, when sending the first quality of service parameter to the second device, the transceiver unit 702 is configured to send the first quality of service parameter to the terminal device and/or a user plane function device.

In a possible implementation, when the maximum bit rate includes one or more of the maximum bit rate that can be reached by the data flow of the terminal device, the maximum value that can be reached by the sum of the bit rates of the data flows of the terminal device, or the maximum value that can be reached by the sum of the bit rates of the data flows in the session of the terminal device in one slice, when sending the first quality of service parameter to the second device, the transceiver unit 702 is configured to send the first quality of service parameter to the terminal device and/or an access network device.

In a possible implementation, that the first priority indicates that a priority of a data flow of the non-uncrewed aerial vehicle service is lower than a priority of a data flow of an uncrewed aerial vehicle service may be: A value of the first priority indicates that the priority of the data flow of the non-uncrewed aerial vehicle service is lower than the priority of the data flow of the uncrewed aerial vehicle service, the value of the first priority belongs to a first set, a priority of a data flow corresponding to any element in the first set is lower than a priority of a data flow corresponding to any element in a second set, the first set corresponds to the non-uncrewed aerial vehicle service, and the second set corresponds to the uncrewed aerial vehicle service.

In a possible implementation, that the first identifier indicates a data flow of the non-uncrewed aerial vehicle service may be: A value of the first identifier indicates the data flow of the non-uncrewed aerial vehicle service, the value of the first identifier belongs to a third set, the third set does not intersect a fourth set, any element in the third set indicates the non-uncrewed aerial vehicle service, and any element in the fourth set indicates the uncrewed aerial vehicle service.

In another example, the communication apparatus 700 may implement functions or steps implemented by the second device in the foregoing method embodiments.

The transceiver unit 702 is configured to receive a first quality of service parameter from a first device, where the first quality of service parameter includes one or more of the following parameters:
a first maximum bit rate, where the first maximum bit rate is a maximum bit rate corresponding to the non-uncrewed aerial vehicle service;
a first priority, where the first priority indicates that a priority of a data flow of the non-uncrewed aerial vehicle service is lower than a priority of a data flow of an uncrewed aerial vehicle service; or
a first identifier, where the first identifier indicates a data flow of the non-uncrewed aerial vehicle service.

The processing unit 701 is configured to control a data flow of a non-uncrewed aerial vehicle service of a terminal device based on the first quality of service parameter.

In a possible implementation, the transceiver unit 702 is further configured to receive a second quality of service parameter from the first device; and the processing unit 701 is further configured to control the data flow of the uncrewed aerial vehicle service of the terminal device based on the second quality of service parameter, where the second quality of service parameter includes one or more of the following parameters:
a second maximum bit rate, where the second maximum bit rate is a maximum bit rate corresponding to the uncrewed aerial vehicle service;
a second priority, where the second priority indicates the priority of the data flow of the uncrewed aerial vehicle service; or
a second identifier, where the second identifier indicates the data flow of the uncrewed aerial vehicle service.

In a possible implementation, the second device is the terminal device or a user plane function device, and before controlling the data flow of the non-uncrewed aerial vehicle service of the terminal device based on the first quality of service parameter, the processing unit 701 is further configured to: determine a service type of each of a plurality of data packets, where the plurality of data packets include a data packet of the non-uncrewed aerial vehicle service, and the service type includes the non-uncrewed aerial vehicle service and the uncrewed aerial vehicle service; and map the plurality of data packets to at least one data flow, where the at least one data flow includes the data flow of the non-uncrewed aerial vehicle service.

In a possible implementation, the processing unit 701 is further configured to add the first identifier to the data flow of the non-uncrewed aerial vehicle service.

In a possible implementation, the second device is an access network device, and before controlling the data flow of the non-uncrewed aerial vehicle service of the terminal device based on the first quality of service parameter, the transceiver unit 702 is further configured to receive at least one data flow from the terminal device or a user plane function device; and the processing unit 701 is further configured to determine the data flow of the non-uncrewed aerial vehicle service and the data flow of the uncrewed aerial vehicle service based on a service type of a data packet in each of the at least one data flow and/or the first identifier.

In a possible implementation, the first quality of service parameter includes the maximum bit rate of the non-uncrewed aerial vehicle service, and the maximum bit rate is a maximum bit rate that can be reached by one data flow of the terminal device; when controlling the data flow of the non-uncrewed aerial vehicle service of the terminal device based on the first quality of service parameter, the processing unit 701 is configured to: obtain a first data flow, where the first data flow is the data flow of the non-uncrewed aerial vehicle service; and determine a bit rate of the first data flow; and if the bit rate of the first data flow is less than the maximum bit rate of the non-uncrewed aerial vehicle service, the transceiver unit 702 is further configured to send the first data flow; or if the bit rate of the first data flow is greater than or equal to the maximum bit rate of the non-uncrewed aerial vehicle service, the transceiver unit 702 is further configured to not send the first data flow.

In a possible implementation, the first quality of service parameter includes the maximum bit rate of the non-uncrewed aerial vehicle service; when the data flow of the non-uncrewed aerial vehicle service of the terminal device is controlled based on the first quality of service parameter, the transceiver unit 702 is configured to receive a first data flow, where the first data flow is the data flow of the non-uncrewed aerial vehicle service; and the processing unit 701 is configured to determine a sum of bit rates of a received data flow of the non-uncrewed aerial vehicle service and the first data flow; and if the sum of the bit rates is less than the maximum bit rate of the non-uncrewed aerial vehicle service, the transceiver unit 702 is further configured to send the first data flow; or if the sum of the bit rates is greater than or equal to the maximum bit rate of the non-uncrewed aerial vehicle service, the transceiver unit 702 is further configured to not send the first data flow.

In a possible implementation, the first quality of service parameter includes the first priority, and when controlling the data flow of the non-uncrewed aerial vehicle service of the terminal device based on the first quality of service parameter, the processing unit 701 is configured to: obtain a first data flow and a second data flow, where the first data flow is the data flow of the non-uncrewed aerial vehicle service, and the second data flow is the data flow of the uncrewed aerial vehicle service; and send the second data flow based on the first priority.

In a possible implementation, the transceiver unit 702 is further configured to receive fifth indication information from the first device, where the fifth indication information indicates that the first quality of service parameter is applicable to the non-uncrewed aerial vehicle service.

In a possible implementation, the maximum bit rate includes one or more of the following:
a maximum bit rate that can be reached by a data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

In a possible implementation, when the maximum bit rate includes one or more of the maximum value that can be reached by the sum of the bit rates of the data flows in one session of the terminal device, the maximum value that can be reached by the sum of the bit rates of the data flows in the session for the connection of the terminal device through one user plane function device, or the maximum value that can be reached by the sum of the bit rates of the data flows in the session for the connection between the terminal device and one data network, the second device is the terminal device and/or the user plane function device.

In a possible implementation, when the maximum bit rate includes one or more of the maximum bit rate that can be reached by the data flow of the terminal device, the maximum value that can be reached by the sum of the bit rates of the data flows of the terminal device, or the maximum value that can be reached by the sum of the bit rates of the data flows in the session of the terminal device in one slice, the second device is the terminal device and/or the access network device.

For more detailed descriptions of the processing unit 701 and the transceiver unit 702, directly refer to related descriptions in the method embodiment shown in any one of FIG. 4 to FIG. 6. Details are not described herein again.

FIG. 8 shows a communication apparatus 800 according to an embodiment of this application. The communication apparatus 800 may be a first device, and can implement functions of the first device in the method provided in embodiments of this application. Alternatively, the communication apparatus 800 may be a second device, and can implement functions of the second device in the method provided in embodiments of this application. Alternatively, the communication apparatus 800 may be an apparatus that can support the first device in implementing the corresponding functions in the method provided in embodiments of this application, or an apparatus that can support the second device in implementing the corresponding functions in the method provided in embodiments of this application. The communication apparatus 800 may be a chip system. In this embodiment of this application, the chip system may include a chip, or may include a chip and another discrete component.

The communication apparatus 800 includes at least one processor 820, configured to implement or support the communication apparatus 800 in implementing the functions of the first device or the second device in the method provided in embodiments of this application. For details, refer to detailed descriptions in the method examples. Details are not described herein again.

Optionally, the communication apparatus 800 may further include at least one memory 830, configured to store program instructions and/or data. The memory 830 is coupled to the processor 820. The coupling in this embodiment of this application is an indirect coupling or a communication connection between apparatuses, units, or modules, may be in an electrical form, a mechanical form, or another form, and is used for information exchange between the apparatuses, the units, or the modules. The processor 820 may cooperate with the memory 830. The processor 820 may execute the program instructions and/or the data stored in the memory 830, to enable the communication apparatus 800 to implement a corresponding method. At least one of the at least one memory may be included in the processor. The memory 830 may exist independently, for example, may be an off-chip memory, and is connected to the processor 820 through a communication bus (represented by a bold line 840 in FIG. 8). The memory 830 may alternatively be integrated with the processor 820.

Optionally, the communication apparatus 800 may further include a communication interface 810, configured to communicate with another device by using a transmission medium, so that an apparatus used in the communication apparatus 800 can communicate with the another device. For example, when the communication apparatus is the first device, the another device is the second device. The processor 820 may send and receive data through the communication interface 810. The communication interface 810 may be specifically a transceiver.

In a hardware implementation, the transceiver unit 702 may be a transceiver, and the transceiver is integrated into the communication apparatus 800 to form the communication interface 810.

A specific connection medium between the communication interface 810, the processor 820, and the memory 830 is not limited in this embodiment of this application. In this embodiment of this application, in FIG. 8, the memory 830, the processor 820, and the communication interface 810 are connected through the communication bus 840. A manner of connection between other components is merely an example for description, and is not limited thereto. The communication bus 840 may be classified into an address bus, a data bus, a control bus, or the like. For ease of representation, only one bold line is used for representation in FIG. 8, but this does not mean that there is only one communication bus or only one type of communication bus.

In embodiments of this application, the processor 820 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory 830 may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

An embodiment of this application further provides a communication system. Specifically, the communication system includes a first device and/or a second device.

An embodiment of this application further provides a computer-readable storage medium, including instructions. When the instructions are run on a computer, the computer is enabled to perform the methods in the foregoing embodiments.

An embodiment of this application further provides a computer program product, including instructions. When the computer program product runs on a computer, the computer is enabled to perform the methods in the foregoing embodiments.

An embodiment of this application provides a chip system. The chip system includes a processor, may further include a memory, and is configured to implement the function of the first device or the second device in the foregoing methods. The chip system may include a chip, or may include a chip and another discrete component.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
determining, by a first device, a first quality of service parameter corresponding to a non-uncrewed aerial vehicle service of a terminal device, and sending the first quality of service parameter to a second device, wherein
the first quality of service parameter comprises one or more of the following parameters: a first maximum bit rate, wherein the first maximum bit rate is a maximum bit rate corresponding to the non-uncrewed aerial vehicle service; a first priority, wherein the first priority indicates that a priority of a data flow of the non-uncrewed aerial vehicle service is lower than a priority of a data flow of an uncrewed aerial vehicle service; or a first identifier, wherein the first identifier indicates a data flow of the non-uncrewed aerial vehicle service.

2. The method according to claim 1, wherein the method further comprises:
determining, by the first device, a second quality of service parameter corresponding to the uncrewed aerial vehicle service of the terminal device; and
sending, by the first device, the second quality of service parameter to the second device, wherein
the second quality of service parameter comprises one or more of the following parameters: a second maximum bit rate, wherein the second maximum bit rate is a maximum bit rate corresponding to the uncrewed aerial vehicle service; a second priority, wherein the second priority indicates the priority of the data flow of the uncrewed aerial vehicle service; or a second identifier, wherein the second identifier indicates the data flow of the uncrewed aerial vehicle service.

3. The method according to claim 2, wherein the method further comprises:
obtaining, by the first device, a first bit rate and a second bit rate based on subscription information, wherein the first bit rate is a maximum bit rate that corresponds to the non-uncrewed aerial vehicle service and to which the terminal device subscribes, and the second bit rate is a maximum bit rate that corresponds to the uncrewed aerial vehicle service and to which the terminal device subscribes.

4. The method according to claim 3, wherein the method further comprises:
obtaining, by the first device, the subscription information that is stored; or
receiving, by the first device, the subscription information from a unified data management device.

5. The method according to claim 3 or 4, wherein the subscription information comprises first indication information and second indication information, the first indication information indicates that the first bit rate is applicable to the non-uncrewed aerial vehicle service, and the second indication information indicates that the second bit rate is applicable to the uncrewed aerial vehicle service.

6. The method according to any one of claims 2 to 5, wherein the method further comprises:
obtaining, by the first device, a third bit rate and a fourth bit rate based on authorization information, wherein the third bit rate is a maximum bit rate that corresponds to the non-uncrewed aerial vehicle service and that is authorized to the terminal device, and the fourth bit rate is a maximum bit rate that corresponds to the uncrewed aerial vehicle service and that is authorized to the terminal device.

7. The method according to claim 6, wherein the method further comprises:
obtaining, by the first device, the authorization information that is stored; or
receiving, by the first device, the authorization information from a data network or a policy control function device.

8. The method according to claim 6 or 7, wherein the authorization information comprises third indication information and fourth indication information, the third indication information indicates that the third bit rate is applicable to the non-uncrewed aerial vehicle service, and the fourth indication information indicates that the fourth bit rate is applicable to the uncrewed aerial vehicle service.

9. The method according to any one of claims 1 to 8, wherein the determining, by a first device, a first quality of service parameter corresponding to a non-uncrewed aerial vehicle service of a terminal device comprises:
sending, by the first device, a first message to the policy control function device, wherein the first message is used to request a quality of service parameter corresponding to the non-uncrewed aerial vehicle service of the terminal device; and
receiving, by the first device, a second message from the policy control function device, wherein the second message comprises the first quality of service parameter.

10. The method according to any one of claims 1 to 9, wherein the method further comprises:
sending, by the first device, fifth indication information to the second device, wherein the fifth indication information indicates that the first quality of service parameter is applicable to the non-uncrewed aerial vehicle service.

11. The method according to any one of claims 1 to 10, wherein the maximum bit rate comprises one or more of the following:
a maximum bit rate that can be reached by one data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

12. The method according to claim 11, wherein when the maximum bit rate comprises one or more of the maximum value that can be reached by the sum of the bit rates of the data flows in one session of the terminal device, the maximum value that can be reached by the sum of the bit rates of the data flows in the session for the connection of the terminal device through one user plane function device, or the maximum value that can be reached by the sum of the bit rates of the data flows in the session for the connection between the terminal device and one data network, the sending, by the first device, the first quality of service parameter to a second device comprises:
sending, by the first device, the first quality of service parameter to the terminal device and/or a user plane function device.

13. The method according to claim 11, wherein when the maximum bit rate comprises one or more of the maximum bit rate that can be reached by the data flow of the terminal device, the maximum value that can be reached by the sum of the bit rates of the data flows of the terminal device, or the maximum value that can be reached by the sum of the bit rates of the data flows in the session of the terminal device in one slice, the sending, by the first device, the first quality of service parameter to a second device comprises:
sending, by the first device, the first quality of service parameter to the terminal device and/or an access network device.

14. The method according to any one of claims 1 to 13, wherein that the first priority indicates that a priority of a data flow of the non-uncrewed aerial vehicle service is lower than a priority of a data flow of an uncrewed aerial vehicle service comprises:
a value of the first priority indicates that the priority of the data flow of the non-uncrewed aerial vehicle service is lower than the priority of the data flow of the uncrewed aerial vehicle service, the value of the first priority belongs to a first set, a priority of a data flow corresponding to any element in the first set is lower than a priority of a data flow corresponding to any element in a second set, the first set corresponds to the non-uncrewed aerial vehicle service, and the second set corresponds to the uncrewed aerial vehicle service.

15. The method according to any one of claims 1 to 10, wherein that the first identifier indicates a data flow of the non-uncrewed aerial vehicle service comprises:
a value of the first identifier indicates the data flow of the non-uncrewed aerial vehicle service, the value of the first identifier belongs to a third set, the third set does not intersect a fourth set, any element in the third set indicates the non-uncrewed aerial vehicle service, and any element in the fourth set indicates the uncrewed aerial vehicle service.

16. A communication method, wherein the method comprises:
receiving, by a second device, a first quality of service parameter from a first device, and controlling a data flow of a non-uncrewed aerial vehicle service of a terminal device based on the first quality of service parameter, wherein
the first quality of service parameter comprises one or more of the following parameters: a first maximum bit rate, wherein the first maximum bit rate is a maximum bit rate corresponding to the non-uncrewed aerial vehicle service; a first priority, wherein the first priority indicates that a priority of the data flow of the non-uncrewed aerial vehicle service is lower than a priority of a data flow of an uncrewed aerial vehicle service; or a first identifier, wherein the first identifier indicates the data flow of the non-uncrewed aerial vehicle service.

17. The method according to claim 16, wherein the method further comprises:
receiving, by the second device, a second quality of service parameter from the first device; and
controlling, by the second device, the data flow of the uncrewed aerial vehicle service of the terminal device based on the second quality of service parameter, wherein
the second quality of service parameter comprises one or more of the following parameters: a second maximum bit rate, wherein the second maximum bit rate is a maximum bit rate corresponding to the uncrewed aerial vehicle service; a second priority, wherein the second priority indicates the priority of the data flow of the uncrewed aerial vehicle service; or a second identifier, wherein the second identifier indicates the data flow of the uncrewed aerial vehicle service.

18. The method according to claim 16 or 17, wherein the second device is the terminal device or a user plane function device, and before the controlling a data flow of a non-uncrewed aerial vehicle service of a terminal device based on the first quality of service parameter, the method further comprises:
determining, by the second device, a service type of each of a plurality of data packets, wherein the plurality of data packets comprise a data packet of the non-uncrewed aerial vehicle service, and the service type comprises the non-uncrewed aerial vehicle service and the uncrewed aerial vehicle service; and
mapping, by the second device, the plurality of data packets to at least one data flow, wherein the at least one data flow comprises the data flow of the non-uncrewed aerial vehicle service.

19. The method according to claim 18, wherein the method further comprises:
adding, by the second device, the first identifier to the data flow of the non-uncrewed aerial vehicle service.

20. The method according to claim 16 or 17, wherein the second device is an access network device, and before the controlling a data flow of a non-uncrewed aerial vehicle service of a terminal device based on the first quality of service parameter, the method further comprises:
receiving, by the second device, at least one data flow from the terminal device or a user plane function device; and
determining, by the second device, the data flow of the non-uncrewed aerial vehicle service based on a service type of a data packet in each of the at least one data flow and/or the first identifier.

21. The method according to any one of claims 16 to 20, wherein the first quality of service parameter comprises the maximum bit rate of the non-uncrewed aerial vehicle service, and the maximum bit rate is a maximum bit rate that can be reached by one data flow of the terminal device; and
the controlling, by the second device, a data flow of a non-uncrewed aerial vehicle service of a terminal device based on the first quality of service parameter comprises:
obtaining, by the second device, a first data flow, wherein the first data flow is a data flow of the non-uncrewed aerial vehicle service;
determining, by the second device, a bit rate of the first data flow; and
if the bit rate of the first data flow is less than the maximum bit rate of the non-uncrewed aerial vehicle service, sending, by the second device, the first data flow; or
if the bit rate of the first data flow is greater than or equal to the maximum bit rate of the non-uncrewed aerial vehicle service, skipping sending, by the second device, the first data flow.

22. The method according to any one of claims 16 to 20, wherein the first quality of service parameter comprises the maximum bit rate of the non-uncrewed aerial vehicle service; and
the controlling, by the second device, a data flow of a non-uncrewed aerial vehicle service of a terminal device based on the first quality of service parameter comprises:
receiving, by the second device, a first data flow, wherein the first data flow is a data flow of the non-uncrewed aerial vehicle service;
determining, by the second device, a sum of bit rates of a received data flow of the non-uncrewed aerial vehicle service and the first data flow; and
if the sum of the bit rates is less than the maximum bit rate of the non-uncrewed aerial vehicle service, sending, by the second device, the first data flow; or
if the sum of the bit rates is greater than or equal to the maximum bit rate of the non-uncrewed aerial vehicle service, skipping sending, by the second device, the first data flow.

23. The method according to any one of claims 16 to 22, wherein the first quality of service parameter comprises the first priority, and the controlling, by the second device, a data flow of a non-uncrewed aerial vehicle service of a terminal device based on the first quality of service parameter comprises:
obtaining, by the second device, a first data flow and a second data flow, wherein the first data flow is the data flow of the non-uncrewed aerial vehicle service, and the second data flow is the data flow of the uncrewed aerial vehicle service; and
sending, by the second device, the second data flow based on the first priority.

24. The method according to any one of claims 16 to 22, wherein the method further comprises:
receiving, by the second device, fifth indication information from the first device, wherein the fifth indication information indicates that the first quality of service parameter is applicable to the non-uncrewed aerial vehicle service.

25. The method according to any one of claims 16 to 23, wherein the maximum bit rate comprises one or more of the following:
a maximum bit rate that can be reached by a data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

26. The method according to claim 24, wherein when the maximum bit rate comprises one or more of a maximum value that can be reached by a sum of bit rates of data flows in one session of the terminal device, a maximum value that can be reached by a sum of bit rates of data flows in a session for a connection of the terminal device through one user plane function device, or a maximum value that can be reached by a sum of bit rates of data flows in a session for a connection between the terminal device and one data network, the second device is the terminal device and/or the user plane function device.

27. The method according to claim 24, wherein when the maximum bit rate comprises one or more of a maximum bit rate that can be reached by a data flow of the terminal device, a maximum value that can be reached by a sum of bit rates of data flows of the terminal device, or a maximum value that can be reached by a sum of bit rates of data flows in a session of the terminal device in one slice, the second device is the terminal device and/or the access network device.

28. A communication apparatus, comprising a processing unit and a transceiver unit, wherein
the processing unit is configured to determine a first quality of service parameter corresponding to a non-uncrewed aerial vehicle service of a terminal device; and
the transceiver unit is configured to send the first quality of service parameter to a second device, wherein
the first quality of service parameter comprises one or more of the following parameters: a first maximum bit rate, wherein the first maximum bit rate is a maximum bit rate corresponding to the non-uncrewed aerial vehicle service; a first priority, wherein the first priority indicates that a priority of a data flow of the non-uncrewed aerial vehicle service is lower than a priority of a data flow of an uncrewed aerial vehicle service; or a first identifier, wherein the first identifier indicates a data flow of the non-uncrewed aerial vehicle service.

29. The apparatus according to claim 28, wherein
the processing unit is further configured to determine a second quality of service parameter corresponding to the uncrewed aerial vehicle service of the terminal device; and
the transceiver unit is further configured to send the second quality of service parameter to the second device, wherein
the second quality of service parameter comprises one or more of the following parameters: a second maximum bit rate, wherein the second maximum bit rate is a maximum bit rate corresponding to the uncrewed aerial vehicle service; a second priority, wherein the second priority indicates the priority of the data flow of the uncrewed aerial vehicle service; or a second identifier, wherein the second identifier indicates the data flow of the uncrewed aerial vehicle service.

30. The apparatus according to claim 29, wherein the processing unit is further configured to:
obtain a first bit rate and a second bit rate based on subscription information, wherein the first bit rate is a maximum bit rate that corresponds to the non-uncrewed aerial vehicle service and to which the terminal device subscribes, and the second bit rate is a maximum bit rate that corresponds to the uncrewed aerial vehicle service and to which the terminal device subscribes.

31. The apparatus according to claim 30, wherein
the processing unit is further configured to obtain the subscription information that is stored; or
the transceiver unit is further configured to receive the subscription information from a unified data management device.

32. The apparatus according to claim 30 or 31, wherein the subscription information comprises first indication information and second indication information, the first indication information indicates that the first bit rate is applicable to the non-uncrewed aerial vehicle service, and the second indication information indicates that the second bit rate is applicable to the uncrewed aerial vehicle service.

33. The apparatus according to any one of claims 29 to 32, wherein the processing unit is further configured to:
obtain a third bit rate and a fourth bit rate based on authorization information, wherein the third bit rate is a maximum bit rate that corresponds to the non-uncrewed aerial vehicle service and that is authorized to the terminal device, and the fourth bit rate is a maximum bit rate that corresponds to the uncrewed aerial vehicle service and that is authorized to the terminal device.

34. The apparatus according to claim 33, wherein
the processing unit is further configured to obtain the authorization information that is stored; or
the transceiver unit is further configured to receive the authorization information from a data network or a policy control function device.

35. The apparatus according to claim 33 or 34, wherein the authorization information comprises third indication information and fourth indication information, the third indication information indicates that the third bit rate is applicable to the non-uncrewed aerial vehicle service, and the fourth indication information indicates that the fourth bit rate is applicable to the uncrewed aerial vehicle service.

36. The apparatus according to any one of claims 28 to 35, wherein when the first quality of service parameter corresponding to the non-uncrewed aerial vehicle service of the terminal device is determined, the transceiver unit is specifically configured to:
send a first message to the policy control function device, wherein the first message is used to request a quality of service parameter corresponding to the non-uncrewed aerial vehicle service of the terminal device; and
receive a second message from the policy control function device, wherein the second message comprises the first quality of service parameter.

37. The apparatus according to any one of claims 28 to 36, wherein the transceiver unit is further configured to:
send fifth indication information to the second device, wherein the fifth indication information indicates that the first quality of service parameter is applicable to the non-uncrewed aerial vehicle service.

38. The apparatus according to any one of claims 28 to 37, wherein the maximum bit rate comprises one or more of the following:
a maximum bit rate that can be reached by one data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

39. The apparatus according to claim 38, wherein when the maximum bit rate comprises one or more of the maximum value that can be reached by the sum of the bit rates of the data flows in one session of the terminal device, the maximum value that can be reached by the sum of the bit rates of the data flows in the session for the connection of the terminal device through one user plane function device, or the maximum value that can be reached by the sum of the bit rates of the data flows in the session for the connection between the terminal device and one data network, the transceiver unit is specifically configured to:
send the first quality of service parameter to the terminal device and/or a user plane function device.

40. The apparatus according to claim 38, wherein when the maximum bit rate comprises one or more of the maximum bit rate that can be reached by the data flow of the terminal device, the maximum value that can be reached by the sum of the bit rates of the data flows of the terminal device, or the maximum value that can be reached by the sum of the bit rates of the data flows in the session of the terminal device in one slice, the transceiver unit is specifically configured to:
send the first quality of service parameter to the terminal device and/or an access network device.

41. The apparatus according to any one of claims 28 to 40, wherein that the first priority indicates that a priority of a data flow of the non-uncrewed aerial vehicle service is lower than a priority of a data flow of an uncrewed aerial vehicle service comprises:
a value of the first priority indicates that the priority of the data flow of the non-uncrewed aerial vehicle service is lower than the priority of the data flow of the uncrewed aerial vehicle service, the value of the first priority belongs to a first set, a priority of a data flow corresponding to any element in the first set is lower than a priority of a data flow corresponding to any element in a second set, the first set corresponds to the non-uncrewed aerial vehicle service, and the second set corresponds to the uncrewed aerial vehicle service.

42. The apparatus according to any one of claims 28 to 37, wherein that the first identifier indicates a data flow of the non-uncrewed aerial vehicle service comprises:
a value of the first identifier indicates the data flow of the non-uncrewed aerial vehicle service, the value of the first identifier belongs to a third set, the third set does not intersect a fourth set, any element in the third set indicates the non-uncrewed aerial vehicle service, and any element in the fourth set indicates the uncrewed aerial vehicle service.

43. A communication apparatus, comprising a transceiver unit and a processing unit, wherein
the transceiver unit is configured to receive a first quality of service parameter from a first device; and
the processing unit is configured to control a data flow of a non-uncrewed aerial vehicle service of a terminal device based on the first quality of service parameter, wherein
the first quality of service parameter comprises one or more of the following parameters: a first maximum bit rate, wherein the first maximum bit rate is a maximum bit rate corresponding to the non-uncrewed aerial vehicle service; a first priority, wherein the first priority indicates that a priority of the data flow of the non-uncrewed aerial vehicle service is lower than a priority of a data flow of an uncrewed aerial vehicle service; or a first identifier, wherein the first identifier indicates the data flow of the non-uncrewed aerial vehicle service.

44. The apparatus according to claim 43, wherein
the processing unit is further configured to receive a second quality of service parameter from the first device; and
the processing unit is further configured to control the data flow of the uncrewed aerial vehicle service of the terminal device based on the second quality of service parameter, wherein
the second quality of service parameter comprises one or more of the following parameters: a second maximum bit rate, wherein the second maximum bit rate is a maximum bit rate corresponding to the uncrewed aerial vehicle service; a second priority, wherein the second priority indicates the priority of the data flow of the uncrewed aerial vehicle service; or a second identifier, wherein the second identifier indicates the data flow of the uncrewed aerial vehicle service.

45. The apparatus according to claim 43 or 44, wherein the communication apparatus is the terminal device or a user plane function device, and before controlling the data flow of the non-uncrewed aerial vehicle service of the terminal device based on the first quality of service parameter, the processing unit is further configured to:
determine, by the communication apparatus, a service type of each of a plurality of data packets, wherein the plurality of data packets comprise a data packet of the non-uncrewed aerial vehicle service, and the service type comprises the non-uncrewed aerial vehicle service and the uncrewed aerial vehicle service; and
map, by the communication apparatus, the plurality of data packets to at least one data flow, wherein the at least one data flow comprises the data flow of the non-uncrewed aerial vehicle service.

46. The apparatus according to claim 45, wherein the processing unit is further configured to:
add the first identifier to the data flow of the non-uncrewed aerial vehicle service.

47. The apparatus according to claim 43 or 44, wherein the communication apparatus is an access network device, and before controlling the data flow of the non-uncrewed aerial vehicle service of the terminal device based on the first quality of service parameter, the transceiver unit is further configured to:
receive at least one data flow from the terminal device or a user plane function device; and
the processing unit is further configured to determine the data flow of the non-uncrewed aerial vehicle service based on a service type of a data packet in each of the at least one data flow and/or the first identifier.

48. The apparatus according to any one of claims 43 to 47, wherein the first quality of service parameter comprises the maximum bit rate of the non-uncrewed aerial vehicle service, and the maximum bit rate is a maximum bit rate that can be reached by one data flow of the terminal device;
when controlling the data flow of the non-uncrewed aerial vehicle service of the terminal device based on the first quality of service parameter, the processing unit is specifically configured to:
obtain a first data flow, wherein the first data flow is the data flow of the non-uncrewed aerial vehicle service; and
determine a bit rate of the first data flow; and
if the bit rate of the first data flow is less than the maximum bit rate of the non-uncrewed aerial vehicle service, the transceiver unit is configured to send the first data flow; or
if the bit rate of the first data flow is greater than or equal to the maximum bit rate of the non-uncrewed aerial vehicle service, the transceiver unit sends the first data flow.

49. The apparatus according to any one of claims 43 to 47, wherein the first quality of service parameter comprises the maximum bit rate of the non-uncrewed aerial vehicle service;
when the data flow of the non-uncrewed aerial vehicle service of the terminal device is controlled based on the first quality of service parameter, the transceiver unit is specifically configured to:
receive a first data flow, wherein the first data flow is the data flow of the non-uncrewed aerial vehicle service; and
the processing unit is specifically configured to determine a sum of bit rates of a received data flow of the non-uncrewed aerial vehicle service and the first data flow; and
if the sum of the bit rates is less than the maximum bit rate of the non-uncrewed aerial vehicle service, the transceiver unit is configured to send the first data flow; or
if the sum of the bit rates is greater than or equal to the maximum bit rate of the non-uncrewed aerial vehicle service, the transceiver unit does not send the first data flow.

50. The apparatus according to any one of claims 43 to 49, wherein the first quality of service parameter comprises the first priority, and when controlling the data flow of the non-uncrewed aerial vehicle service of the terminal device based on the first quality of service parameter, the processing unit is specifically configured to:
obtain a first data flow and a second data flow, wherein the first data flow is the data flow of the non-uncrewed aerial vehicle service, and the second data flow is the data flow of the uncrewed aerial vehicle service; and
the transceiver unit is specifically configured to send the second data flow based on the first priority.

51. The apparatus according to any one of claims 43 to 49, wherein the transceiver unit is further configured to:
receive fifth indication information from the first device, wherein the fifth indication information indicates that the first quality of service parameter is applicable to the non-uncrewed aerial vehicle service.

52. The apparatus according to any one of claims 43 to 50, wherein the maximum bit rate comprises one or more of the following:
a maximum bit rate that can be reached by a data flow of the terminal device; or
a maximum value that can be reached by a sum of bit rates of data flows in one session of the terminal device; or
a maximum value that can be reached by a sum of bit rates of data flows in a session for a connection of the terminal device through one user plane function device; or
a maximum value that can be reached by a sum of bit rates of data flows in a session for a connection between the terminal device and one data network; or
a maximum value that can be reached by a sum of bit rates of data flows of the terminal device; or
a maximum value that can be reached by a sum of bit rates of data flows in a session of the terminal device in one slice.

53. The apparatus according to claim 51, wherein when the maximum bit rate comprises one or more of a maximum value that can be reached by a sum of bit rates of data flows in one session of the terminal device, a maximum value that can be reached by a sum of bit rates of data flows in a session for a connection of the terminal device through one user plane function device, or a maximum value that can be reached by a sum of bit rates of data flows in a session for a connection between the terminal device and one data network, the communication apparatus is the terminal device and/or the user plane function device.

54. The apparatus according to claim 51, wherein when the maximum bit rate comprises one or more of a maximum bit rate that can be reached by a data flow of the terminal device, a maximum value that can be reached by a sum of bit rates of data flows of the terminal device, or a maximum value that can be reached by a sum of bit rates of data flows in a session of the terminal device in one slice, the communication apparatus is the terminal device and/or the access network device.

55. A communication apparatus, comprising one or more processors and a memory, wherein the one or more processors are coupled to the memory;
the memory is configured to store a computer program; and
the one or more processors are configured to execute the computer program stored in the memory, so that the communication apparatus performs the method according to any one of claims 1 to 15, or performs the method according to any one of claims 16 to 27.

56. A chip, wherein the chip is coupled to a memory, and is configured to read and execute program instructions stored in the memory, to perform the method according to any one of claims 1 to 15, or perform the method according to any one of claims 16 to 27.

57. A computer-readable storage medium, comprising a program or instructions, wherein when the program or the instructions are run on a computer, the method according to any one of claims 1 to 15 is performed, or the method according to any one of claims 16 to 27 is performed.

58. A communication system, comprising a first device configured to perform the method according to any one of claims 1 to 15, and/or comprising a second device configured to perform the method according to any one of claims 16 to 27.

59. A computer program product, comprising a program or instructions, wherein when the program or the instructions are run on a computer, the method according to any one of claims 1 to 15 is performed, or the method according to any one of claims 16 to 27 is performed.

60. A communication method, wherein the method comprises:
sending, by a first device, a determined first quality of service parameter corresponding to a non-uncrewed aerial vehicle service of a terminal device to a second device, wherein the first quality of service parameter comprises one or more of the following parameters: a first maximum bit rate, wherein the first maximum bit rate is a maximum bit rate corresponding to the non-uncrewed aerial vehicle service; a first priority, wherein the first priority indicates that a priority of a data flow of the non-uncrewed aerial vehicle service is lower than a priority of a data flow of an uncrewed aerial vehicle service; or a first identifier, wherein the first identifier indicates a data flow of the non-uncrewed aerial vehicle service; and
receiving, by the second device, the first quality of service parameter, wherein the first quality of service parameter is used by the second device to control the data flow of the non-uncrewed aerial vehicle service of the terminal device.

61. The method according to claim 60, wherein the method further comprises:
determining, by the first device, the first quality of service parameter.

62. The method according to claim 60 or 61, wherein the method further comprises:
controlling, by the second device, the data flow of the non-uncrewed aerial vehicle service of the terminal device based on the first quality of service parameter.

63. A communication system, comprising a first device and a second device, wherein
the first device is configured to send a determined first quality of service parameter corresponding to a non-uncrewed aerial vehicle service of a terminal device to a second device, wherein the first quality of service parameter comprises one or more of the following parameters: a first maximum bit rate, wherein the first maximum bit rate is a maximum bit rate corresponding to the non-uncrewed aerial vehicle service; a first priority, wherein the first priority indicates that a priority of a data flow of the non-uncrewed aerial vehicle service is lower than a priority of a data flow of an uncrewed aerial vehicle service; or a first identifier, wherein the first identifier indicates a data flow of the non-uncrewed aerial vehicle service; and
the second device is configured to receive the first quality of service parameter, wherein the first quality of service parameter is used by the second device to control the data flow of the non-uncrewed aerial vehicle service of the terminal device.

64. The system according to claim 63, wherein the first device is further configured to determine the first quality of service parameter.

65. The system according to claim 63 or 64, wherein the second device is further configured to control the data flow of the non-uncrewed aerial vehicle service of the terminal device based on the first quality of service parameter.
